# EUROPEAN PATENT APPLICATION

(11) **EP 4 643 623 A1**
(43) Date of publication of application: **05.11.2025**
(21) Application number: 23911450.7
(22) Date of filing: 21.11.2023
(51) Int. Cl.: A01B 69/00, G05D 1/00, G06Q 50/02

(54) **MANAGEMENT DEVICE, MANAGEMENT METHOD, COMPUTER PROGRAM, AND MANAGEMENT SYSTEM**

(30) Priority: 26.12.2022 JP 2022208204
(71) Applicant: Kubota Corporation, Osaka 556-8601 (JP)
(72) Inventor: MURATA, Yusuke, Sakai-shi, Osaka 590-0908 (JP); KOBAYASHI, Eri, Sakai-shi, Osaka 590-0908 (JP); MATSUZAKI, Yushi, Sakai-shi, Osaka 590-0908 (JP)
(74) Representative: Cabinet Beau de Loménie
(86) International application number: PCT/JP2023/041696
(87) International publication number: WO 2024/142668

(57) **Abstract**

A device according to an aspect of the present disclosure is a management apparatus for communicating with an agricultural machine to be operated in a driving mode including self-driving and non-self-driving, the management apparatus including a processing device configured to create a self-driving plan for the agricultural machine, a communication device configured to transmit the self-driving plan to the agricultural machine and receive actual performance data of the agricultural machine, the actual performance data being collected by the agricultural machine, and a storage device configured to store the received actual performance data, in which the actual performance data includes data collected by the agricultural machine during the non-self-driving performed by an intervention occurring in the self-driving performed in accordance with the self-driving plan.

## Description

### TECHNICAL FIELD

The present disclosure relates to a management apparatus, a management method, a computer program, and a management system of an agricultural machine. The present application claims priority based on Japanese Patent Application No. 2022-208204 filed on December 26, 2022, the entire contents of which are incorporated herein by reference.

### BACKGROUND ART

PATENT LITERATURE 1 describes a work vehicle support system including a detection module that detects an own position of a work vehicle, and an outer shape map calculation unit that calculates an outer shape map of an unworked area in a work scheduled area from own position data acquired by the detection module when the work vehicle travels around an outer periphery of the work scheduled area for work.
PATENT LITERATURE 2 describes an automated traveling system capable of securing sufficient safety with a reasonable configuration when a work vehicle is moved between farm fields by automated traveling.

### CITATION LIST

### PATENT LITERATURE

PATENT LITERATURE 1: Japanese Patent Application Laid-Open No. 2017 055673
PATENT LITERATURE 2: Japanese Patent Application Laid-Open No. 2021 073602

### SUMMARY OF THE INVENTION

An apparatus according to an aspect of the present disclosure is a management apparatus for communicating with an agricultural machine to be operated in a driving mode including self-driving and non-self-driving, the management apparatus including a processing device configured to create a self-driving plan for the agricultural machine, a communication device configured to transmit the self-driving plan to the agricultural machine and receive actual performance data of the agricultural machine, the actual performance data being collected by the agricultural machine, and a storage device configured to store the received actual performance data, in which the actual performance data includes data collected by the agricultural machine during the non-self-driving performed by an intervention occurring in the self-driving performed in accordance with the self-driving plan.

A method according to an aspect of the present disclosure is a management method for managing an agricultural machine to be operated in a driving mode including self-driving and non-self-driving, by a management apparatus for communicating with the agricultural machine, the management method including a step of creating a self-driving plan for the agricultural machine, a step of transmitting the self-driving plan to the agricultural machine, a step of receiving actual performance data of the agricultural machine, the actual performance data being collected by the agricultural machine, and a step of storing the received actual performance data, in which the actual performance data includes data collected by the agricultural machine during the non-self-driving performed by an intervention occurring in the self-driving performed in accordance with the self-driving plan.

A computer program according to an aspect of the present disclosure is a computer program for causing a computer to operate as a management apparatus for communicating with an agricultural machine to be operated in a driving mode including self-driving and non-self-driving, the computer program including a step of creating a self-driving plan for the agricultural machine, a step of transmitting the self-driving plan to the agricultural machine, a step of receiving actual performance data of the agricultural machine, the actual performance data being collected by the agricultural machine, and a step of storing the received actual performance data, in which the actual performance data includes data collected by the agricultural machine during the non-self-driving performed by an intervention occurring in the self-driving performed in accordance with the self-driving plan.

A system according to an aspect of the present disclosure is a management system for managing an agricultural machine, the management system including the agricultural machine configured to be operated in a driving mode including self-driving and manual driving, and a management apparatus configured to communicate with the agricultural machine, in which the management apparatus transmits a self-driving plan for the agricultural machine to the agricultural machine, in which the agricultural machine transmits, when an intervention for the manual driving occurs in the self-driving performed in accordance with the self-driving plan, actual performance data of the agricultural machine collected during the manual driving, to the management apparatus, and in which the management apparatus causes a storage device of the management apparatus to store the received actual performance data during the manual driving.

Embodiments of the present disclosure can be implemented by an apparatus, a system, a method, an integrated circuit, a computer program, a computer-readable non-transitory storage medium, or any combination thereof. The computer-readable storage medium may include either a volatile storage medium or a nonvolatile storage medium. The apparatus may include a plurality of individual apparatuses. In the case of a configuration including a plurality of individual apparatuses, the apparatuses may be arranged in one housing, or may be arranged separately in two or more separate housings.

### BRIEF DESCRIPTION OF DRAWINGS

FIG. 1 is a schematic diagram illustrating an example of an overall configuration of a work support system.
FIG. 2 is a side view illustrating a structural example of a work vehicle and an implement.
FIG. 3 is a block diagram illustrating a configuration example of an in-vehicle communication system of a work vehicle.
FIG. 4 is a perspective view illustrating an example of an operation terminal and an operation switch group.
FIG. 5 is a block diagram illustrating an example of internal configurations of a management apparatus, a management terminal, and a remote terminal.
FIG. 6 is an explanatory diagram illustrating an example of a setting screen of information necessary for creating a self-driving plan and information processing.
FIG. 7 is a diagram illustrating an example of a work cost table.
FIG. 8 is a diagram illustrating an example of an agricultural machine current state table.
FIG. 9 is a diagram illustrating an example of a remaining task table.
FIG. 10 is a diagram illustrating an example of a self-driving plan related to one agricultural machine.
FIG. 11 is a state transition diagram illustrating an example of driving mode switching processing.
FIG. 12 is a sequence diagram illustrating an example of a communication sequence of a plan change.
FIG. 13 is an explanatory diagram illustrating a change example of farm field work accompanying a plan change.
FIG. 14 is a flowchart illustrating an example of data storage and update executed by the management apparatus.
FIG. 15 is an explanatory diagram illustrating an example of a work change after an intervention of remote driving.
FIG. 16 is an explanatory diagram illustrating an update example of an agricultural machine current state table.
FIG. 17 is an explanatory diagram illustrating an update example of a remaining task table.
FIG. 18 is an explanatory diagram illustrating an example of a self-driving plan created by recalculation.
FIG. 19 is a diagram illustrating an example of movement track data.
FIG. 20 is a diagram illustrating an example of work actual performance data.

### DETAILED DESCRIPTION

### <Problems to be Solved by Present Disclosure>

In promoting automation of an agricultural machine, it is desirable to integrate and manage actual performance data in the case of self-driving and actual performance data in the case of non-self-driving. However, in PATENT LITERATURES 1 and 2, an efficient method for collecting actual performance data during self-driving and actual performance data during non-self-driving is not assumed.

An object of the present disclosure is to provide a technique capable of efficiently collecting actual performance data of an agricultural machine capable of changing a driving mode.

### <Effects of Present Disclosure>

According to the present disclosure, it is possible to efficiently collect actual performance data of an agricultural machine capable of changing a driving mode.

### <Outline of Embodiment of Present Disclosure>

Hereinafter, an outline of embodiments of the present disclosure will be listed and described.
(1) An apparatus according to the present embodiment is a management apparatus for communicating with an agricultural machine to be operated in a driving mode including self-driving and non-self-driving, the management apparatus including a processing device configured to create a self-driving plan for the agricultural machine, a communication device configured to transmit the self-driving plan to the agricultural machine and receive actual performance data of the agricultural machine, the actual performance data being collected by the agricultural machine, and a storage device configured to store the received actual performance data, in which the actual performance data includes data collected by the agricultural machine during the non-self-driving performed by an intervention occurring in the self-driving performed in accordance with the self-driving plan.
   With the management apparatus of the present embodiment, since the actual performance data stored in the storage device of the management apparatus includes the data collected by the agricultural machine during the non-self-driving performed by the intervention occurring in the self-driving performed in accordance with the self-driving plan, both the actual performance data during the self-driving and the actual performance data during the non-self-driving can be collected from one agricultural machine. Therefore, it is possible to efficiently collect actual performance data of the agricultural machine capable of changing the driving mode.
(2) In the management apparatus of the present embodiment, the actual performance data may further include data collected by the agricultural machine during self-driving after a change made in response to a change request issued in the self-driving performed in accordance with the self-driving plan.
   In this way, since the actual performance data during the self-driving after the change can be further collected from one agricultural machine, the actual performance data of the agricultural machine can be more efficiently collected.
(3) In the management apparatus of the present embodiment, the non-self-driving may include at least one of manual driving during which a human directly operates the agricultural machine and remote driving during which the human operates the agricultural machine with an operation terminal from a remote location.
   In this case, in addition to the actual performance data during the self-driving, at least one of the actual performance data during the manual driving and the actual performance data during the remote driving can be collected from one agricultural machine.
(4) In the management apparatus of the present embodiment, the storage device may include a database in which the actual performance data is accumulated in such a way that the actual performance data is identifiable whether the actual performance data is collected during a period of the self-driving performed in accordance with the self-driving plan, during a period of the manual driving, during a period of the remote driving, or during a period of the self-driving after the change.
   In this way, since the collected actual performance data can be identified for each driving mode, for example, it is easy to analyze or study in which driving mode the work was optimal.
(5) In the management apparatus of the present embodiment, the intervention for the manual driving may occur on a condition involving detection of direct operation by the human.
   This is because it is considered that a human appropriately steers the work vehicle in the manual driving, and thus there is no particular problem even if the driving is suddenly switched to the manual driving only by the detection of the direct operation.
(6) In the management apparatus of the present embodiment, the intervention for the manual driving may be released on a condition involving non-detection of the direct operation for a predetermined time, a state capable of the self-driving, and a stop of operation of the agricultural machine.
   In this case, since the release condition of the intervention of the manual driving includes the stop of the operation of the agricultural machine, smooth switching from the manual driving to the self-driving is implemented as compared with the case where the manual driving is released and the driving is switched to the self-driving during traveling.
(7) In the management apparatus of the present embodiment, an intervention for the remote driving may occur on a condition involving reception of a remote driving start request, stabilization of a communication state, and a stop of operation of the agricultural machine.
   This is because, unlike the manual driving, the remote driving may cause a delay from the operation time point of the operation terminal to the actual start of the operation by the agricultural machine, so that the stable communication state and the stop of the operation of the agricultural machine should be included in the intervention conditions.
(8) In the management apparatus of the present embodiment, the intervention for the remote driving may be released on a condition involving reception of a remote driving end request, a state capable of the self-driving, and the stop of the operation of the agricultural machine.
   In this case, since the release condition of the intervention of the remote driving includes the stop of the operation of the agricultural machine, smooth switching from the remote driving to the self-driving is implemented as compared with the case where the remote driving is released and switched to the self-driving during traveling.
(9) In the management apparatus of the present embodiment, the storage device may further store data for planning required for creating the self-driving plan, and the processing device, when updating the data for planning after the intervention occurs or the change request is issued, may use the updated data for planning in creating the self-driving plan subsequently.
   In this way, since the self-driving plan is created using the updated correct data for planning, creation of an erroneous self-driving plan can be prevented in advance.
(10) In the management apparatus of the present embodiment, the data for planning may include static data whose data content does not change even when the driving mode changes, and dynamic data whose data content possibly changes when the driving mode changes, and the processing device may designate the dynamic data as a target of update when the intervention occurs or when the change request is issued.
   This is because static data whose data content does not change even when the driving mode changes does not need to be updated.
(11) In the management apparatus of the present embodiment, the static data may include at least one of facility data of a farm, a utilization plan of the farm, and agricultural machine information of the farm.
   This is because these pieces of data are setting information determined by the user of the management apparatus, and thus are not affected by a change in the operation mode.
(12) In the management apparatus of the present embodiment, the dynamic data may include at least one of data indicating a current status of the agricultural machine and data indicating a progress status of a task constituting the self-driving plan.
   The reason is that since the current state of the agricultural machine and the progress status of the task change when the moving path and the order of work change, it can be said that the data content can change when the driving mode changes.
(13) A method according to the present embodiment is a management method executed in the management apparatus of (1) to (12) described above. Therefore, the management method of the present embodiment has the same effects as those of the management apparatuses (1) to (12) described above.
(14) A computer program according to the present embodiment is a computer program that causes a computer to function as the management apparatus of (1) to (12) described above. Therefore, the computer program of the present embodiment has the same functions and effects as those of the management apparatus of (1) to (12) described above.
(15) A management system of the present embodiment is a management system for managing an agricultural machine, the management system including the agricultural machine configured to be operated in a driving mode including self-driving and manual driving, and a management apparatus configured to communicate with the agricultural machine, in which the management apparatus transmits a self-driving plan for the agricultural machine to the agricultural machine, in which the agricultural machine transmits, when an intervention for the manual driving occurs in the self-driving performed in accordance with the self-driving plan, actual performance data of the agricultural machine collected during the manual driving, to the management apparatus, and in which the management apparatus causes a storage device of the management apparatus to store the received actual performance data during the manual driving.
   With the management system of the present embodiment, the agricultural machine having a driving mode including self-driving and non-self-driving transmits, when an intervention for the manual driving occurs in the self-driving performed in accordance with the self-driving plan, the actual performance data of the agricultural machine collected during the manual driving to the management apparatus, and the management apparatus causes the storage device of the management apparatus to store the received actual performance data during the manual driving. Therefore, both the actual performance data during the self-driving and the actual performance data during the manual driving can be collected from one agricultural machine. Therefore, it is possible to efficiently collect actual performance data of the agricultural machine capable of changing the driving mode.
(16) In the management system of the present embodiment, the driving mode may further include remote driving, the management system may further include a remote terminal configured to communicate with the agricultural machine and cause the agricultural machine to perform the remote driving, the agricultural machine may transmit, when an intervention for the remote driving occurs in the self-driving performed in accordance with the self-driving plan, actual performance data of the agricultural machine collected during the remote driving, to the management apparatus, and the management apparatus may cause the storage device of the management apparatus to store the received actual performance data during the remote driving.
   In this way, since actual performance data during remote driving can be further collected from one agricultural machine, the actual performance data of the agricultural machine can be collected more efficiently.
(17) In the management system of the present embodiment, the remote terminal may be capable of transmitting, to the agricultural machine, a change request for changing the self-driving, the agricultural machine may transmit, to the management apparatus, actual performance data of the agricultural machine collected during self-driving after a change made in response to the change request received in the self-driving performed in accordance with the self-driving plan, and the management apparatus may cause the storage device of the management apparatus to store the received actual performance data during the self-driving after the change.

In this way, since the actual performance data during the self-driving after the change can be further collected from one agricultural machine, the actual performance data of the agricultural machine can be more efficiently collected.

### <Details of Embodiment of Present Disclosure>

Hereinafter, embodiments of the present invention will be described in detail with reference to the drawings. Note that at least some of the embodiments described below may be arbitrarily combined.

### Definition of Terms

In describing the details of the present embodiment, the terms used herein are first defined.

"Agricultural Work": It is work performed by an agricultural machine on the ground in a farm field. It is also referred to as "ground work" or simply "work". Examples of agricultural works include tilling, sowing, control, fertilization, planting of crops, and harvesting.

"Agricultural Machine": It is a machine used in agricultural applications, and sometimes abbreviated as "agricultural machine". Examples of the agricultural machine include a tractor, a harvest machine, a rice transplanter, a riding management machine, a vegetable transplanter, a mower, a seeder, a fertilizing machine, and an agricultural mobile robot.

In a tractor, not only a work vehicle alone functions as an agricultural machine, but also a work implement (an implement) attached to the work vehicle and the entire work vehicle may function as one agricultural machine.

"Working Vehicle": It is a vehicle capable of performing agricultural works on a farm field.

"Work Implement": An implement detachably attached to a work vehicle, the implement performing agricultural work while being towed by the work vehicle. It is also referred to as "implement".

"Work Travel": This means that the agricultural machine travels while executing work. The work travel may be performed regardless of the difference in driving mode.

"Movement between farm fields": This means that the agricultural machine moves along a general road, a farm road, or the like between farm fields without executing work. The inter-farm field movement can be performed regardless of the difference in driving mode. The inter-farm field movement may include a barn or a warehouse as a departure place, a transit place, or an arrival place.

"Driving Mode": In a case where the operation method of the agricultural machine can be switched in accordance with the preference of the user, an individual operation method that can be selected for the agricultural machine is referred to as a driving mode.

The driving mode that the agricultural machine can execute varies depending on the model or type of the agricultural machine, and the like, and may include manual driving, remote driving, and self-driving described later.

"Manual Driving": It is an operation in which a human directly steers an agricultural machine. The manual driving also includes a case where a human on the work vehicle steers the implement.

"Manual Traveling" and "Manual Steering": Traveling of the agricultural machine by manual driving is referred to as manual traveling, and steering of the agricultural machine by manual driving is referred to as manual steering. Manual traveling and manual steering are included in the concept of manual driving.

"Self-Driving": It is driving of the agricultural machine by the control device of the agricultural machine. In the self-driving, the control device controls start and stop of traveling, self-steering, speed adjustment, and the like. In the work vehicle, lifting and lowering of the implement and start and stop of work can also be controlled.

"Self-Traveling" and "Self-Steering": Traveling of the agricultural machine by self-driving is referred to as self-driving, and steering of the agricultural machine by self-driving is referred to as self-steering. Self-driving and self-steering are included in the concept of self-driving.

"Remote Driving": It is an operation in which a human in a location away from an agricultural machine remotely operates the agricultural machine using an operation terminal (remote controller). Remote driving also includes remote driving of an implement attached to the work vehicle by a person at a distant location.

"Remote Travel" and "Remote Steering": Traveling of the agricultural machine by remote driving is referred to as remote traveling, and steering of the agricultural machine by remote driving is referred to as remote steering. Remote traveling and remote steering are included in the concept of remote driving.

"Non-Self-Driving": It is a driving mode other than self-driving. In the present embodiment, manual driving and remote driving correspond to non-self-driving.

"Target Path": It is a path through which the agricultural machine should travel by self-driving. The target path generation subject may be either a control device of the agricultural machine or an external device that communicates with the agricultural machine. The target path generated by the external device is transmitted to the agricultural machine by the external device.

The control device of the agricultural machine controls the drive device of the agricultural machine so that the agricultural machine moves along the target path. Thus, the control device moves the agricultural machine toward a destination such as a farm field, a barn, or a storage location of an implement.

"Actual Performance Data": It is data representing performance related to operation of an agricultural machine. The actual performance data is collected by the control device of the agricultural machine and presented to the management apparatus. That is, the control device of the agricultural machine transmits the actual performance data of the agricultural machine to the management apparatus in real time or every predetermined time.

The management apparatus accumulates the actual performance data received from the agricultural machine as a management target for each identification information of the agricultural machine. The content of the actual performance data varies depending on the work content, but is roughly divided into, for example, "movement track data", "work actual performance data", "control actual performance data", and "self-driving data".

"Movement Track Data": It is time series data of a location (current location) of the agricultural machine.

"Work Actual Performance Data": It is time series data of information (for example, a fertilizer application amount, a PTO rotation speed, and the like) related to the agricultural work executed by the agricultural machine.

"Control Actual Performance Data": It is time series data of various sensor data of the agricultural machine and/or control information for the actuator.

"Self-Driving Data": It is time series data of control information related to self-driving output from a control device of an agricultural machine during self-driving.

"Self-Driving Plan": It is information defining a future work content to be executed by the agricultural machine by self-driving. The self-driving plan can include, for example, a content of a task which is a unit of work executed by the agricultural machine by self-driving, an execution time (date and time slot) of the task, identification information (hereinafter, the task ID is also referred to as a "task ID") of the task, and the like.

The task may include not only the work content in the farm field but also a movement path (also referred to as an "inter-farm field path") in a case where the agricultural machine performs the movement between the farm fields.

"Data for Planning": It is data used for creating or updating a self-driving plan. The data for planning is roughly divided into, for example, "static data" and "dynamic data".

"Static Data": It is data for planning in which the data content does not change even when the driving mode of the agricultural machine changes. The static data includes, for example, "facility data", "utilization plan", "agricultural machine information", "work cost data", and the like set by a person in charge of management of the farm.

"Facility Data": It is information indicating position information of real estate facilities such as a farm field, a barn, and a warehouse included in the farm. The position information of the farm field can include not only a point such as a center point or a corner point of the farm field but also a coordinate group of a predetermined particle size that can specify a boundary of the farm field.

"Utilization Plan": It is information indicating a utilization plan of the farm in a predetermined period (for example, one year). The utilization plan can include, for example, a use period of each farm field, a type of crops cultivated in the use period, and the like.

"Agricultural Machine Information": It is information indicating a type of one or a plurality of agricultural machines (movable property) that can be used in a farm. The type of the agricultural machine is defined by, for example, a product number or a model of an agricultural machine. In the case of the work vehicle, the type of the implement that can be attached to the work vehicle and can be actually used is also included.

"Work Cost Data": It is data defining a cost (for example, a required time) of each work that can be performed at the farm. The work cost data can include a work content, a required time, and the like for each piece of identification information (hereinafter, also referred to as a "work ID") of each work. The required time may be defined manually or may be calculated by the management apparatus from facility data, agricultural machine information, and the like.

"Dynamic Data": It is data for planning in which data contents may change when the driving mode of the agricultural machine changes. The dynamic data includes "agricultural machine current state data", "remaining task data", and the like.

"Agricultural Machine Current State Data": It is data indicating the current state of each agricultural machine included in the agricultural machine information. As the current state of the agricultural machine, for example, a current position of the agricultural machine, a current driving mode, a type of an implement currently attached (in the case of a tractor), and the like can be assumed.

"Remaining Task Data": It is data representing a progress status of a task constituting the self-driving plan. The remaining task data can include, for example, a task ID, a work ID corresponding to the task ID, a status for identifying completion or incompletion of the task, a period during which the task should be executed, and the like.

### [Overall Configuration of System]

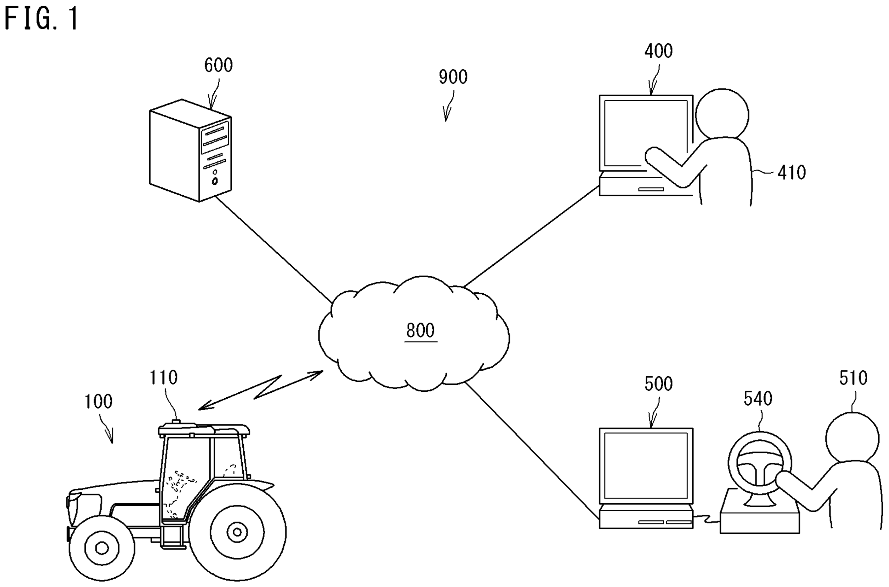

FIG. 1 is a schematic diagram illustrating an example of an overall configuration of a management system of an agricultural machine.

As illustrated in FIG. 1, a management system 900 according to the present embodiment includes a work vehicle 100, a first terminal device 400, a second terminal device 500, and a management apparatus 600.

Although one work vehicle 100 is illustrated in FIG. 1, the management system 900 may include one or more other work vehicles 100 or other types of agricultural machines.

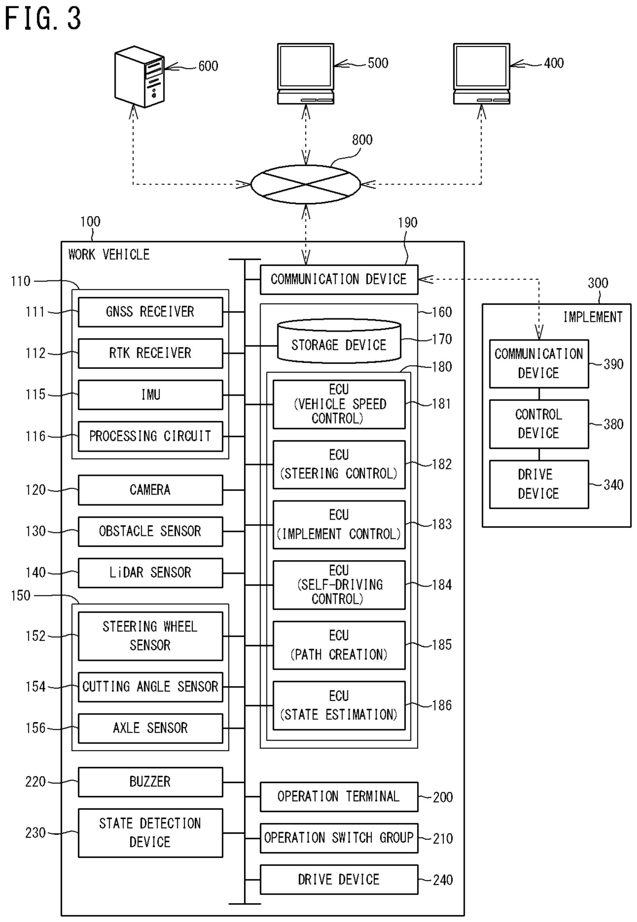

The driving mode of the work vehicle 100 includes at least three types of manual driving, remote driving, and self-driving. In the case of self-driving, the work vehicle 100 autonomously travels by a control device (for example, the electronic control unit 180 of FIG. 3).

The control device of the work vehicle 100 is provided inside the work vehicle 100, and can control the speed and steering of the work vehicle 100.

Therefore, the work vehicle 100 in the self-driving mode travels in an unmanned manner, and can perform work and pass both inside and outside the farm field (road).

In the case of remote driving, the work vehicle 100 performs work traveling or inter-farm field movement in accordance with a remote driving by a user 510 of the second terminal device 500. The interface of an operation device 540 connected to the remote terminal 500 is configured so that the remote driving by the user 510 is substantially the same as the manual driving at the driver's seat.

The management apparatus 600 is, for example, a server computer managed by a company (for example, an agricultural machine manufacturer or an information-related company) that operates the management system 900. Hereinafter, the management apparatus 600 is referred to as a "management server 600".

The management server 600 centrally manages data related to the agricultural machine and supports the agricultural works using the data. Using the information received from the first terminal device 400, the management server 600 can create a self-driving plan to be executed by an agricultural machine such as the work vehicle 100.

The first terminal device 400 is a computer used by a user (hereinafter referred to as a "management user") 410 who remotely manages the work vehicle 100. Hereinafter, the first terminal device 400 is referred to as a "management terminal 400".

The management user 410 is, for example, a person in charge of management of a farm. The management terminal 400 is, for example, a stationary computer such as a desktop PC. The management terminal 400 may be a mobile terminal such as a smartphone, a tablet computer, or a laptop computer.

The management terminal 400 can display a setting screen of information necessary for creating the self-driving plan on the display. When the management user 410 inputs necessary information on the setting screen and performs a transmission operation, the management terminal 400 transmits the input information to the management server 600.

The management terminal 400 can also be used for monitoring the work vehicle 100. For example, the management terminal 400 displays a video captured by the camera of the work vehicle 100 on the display. The management user 410 can confirm the situation around the work vehicle 100 by the displayed video.

The second terminal device 500 is a computer used by a user (hereinafter referred to as an "operation user") 510 who remotely operates the work vehicle 100. Hereinafter, the second terminal device 500 is referred to as a "remote terminal 500".

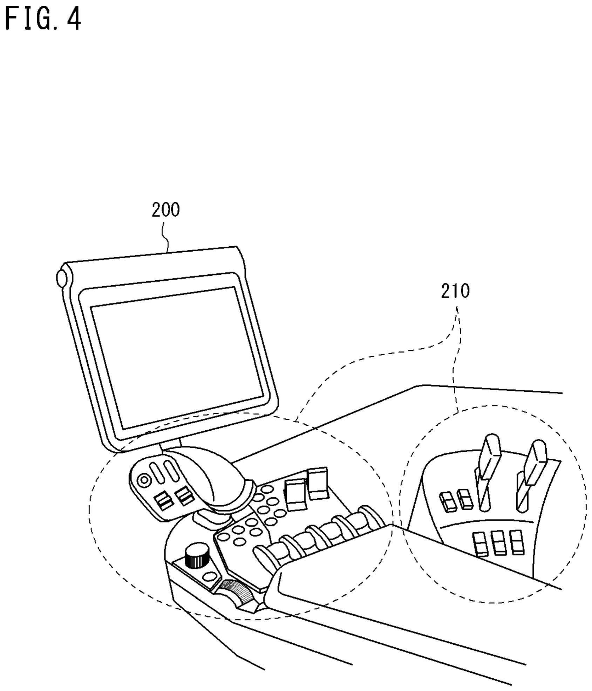

The remote terminal 500 is, for example, a stationary computer such as a desktop PC. The remote terminal 500 includes the operation device 540 that allows the operation user 510 to perform substantially the same operation as the occupant of the work vehicle 100. The operation device 540 may include an operation terminal 200 and an operation switch group 210 (see FIG. 4) of the work vehicle 100.

In FIG. 1, the management terminal 400 and the remote terminal 500 are installed in different locations, but they may exist in the same room of the building. In this case, the management user 410 and the operation user 510 may be the same person.

In FIG. 1, the management terminal 400 and the remote terminal 500 are separate computers, but the management terminal 400 and the remote terminal 500 may be one computer capable of comprehensively executing these functions.

### [Structural Example of Work Vehicle]

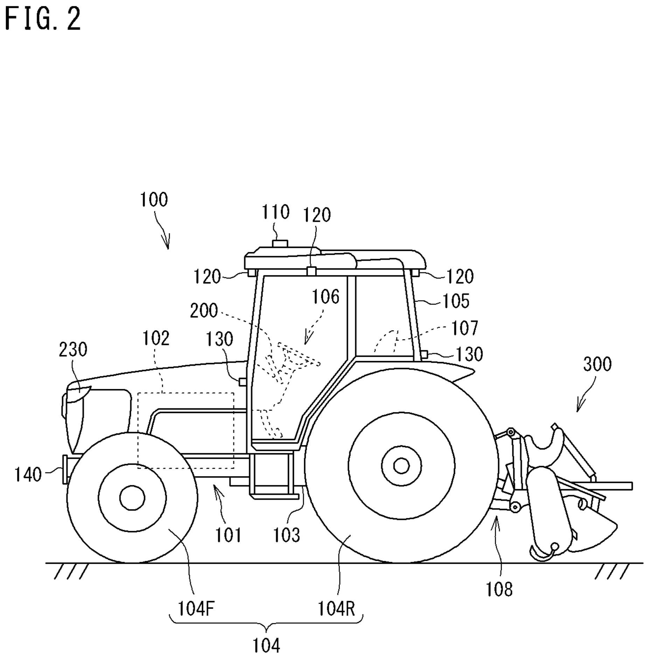

FIG. 2 is a side view illustrating a structural example of the work vehicle 100 and an implement 300.

As illustrated in FIG. 2, the work vehicle 100 includes a vehicle body 101, a prime mover (engine) 102, and a transmission device (transmission) 103.

The vehicle body 101 includes tires (wheels) 104 and a cabin 105. The tires 104 include a pair of left and right front wheels 104F and a pair of left and right rear wheels 104R. One or both of the front wheels 104F and the rear wheels 104R may be crawlers.

Inside the cabin 105, a steering device 106, a driver's seat 107, the operation terminal 200 (see FIG. 4), and the switch group 210 for operation (see FIG. 4) are mounted.

The work vehicle 100 includes a plurality of cameras 120. The cameras 120 are provided at each of front, rear, left, and right positions of the work vehicle 100, for example. The cameras 120 capture images of an environment around the work vehicle 100 to generate image data.

The image data generated by the camera 120 is transmitted to the management terminal 400 and the remote terminal 500.

The image data is used by the user 410 or 510 to monitor or operate the work vehicle 100, for example, during unmanned driving. The image data is also used as original data for image recognition of a white line, a sign, a display, a surrounding obstacle, or the like on a road.

The work vehicle 100 includes a positioning device 110 including a GNSS receiver, for example, at the top of the cabin 105. The GNSS receiver includes an antenna that receives a GNSS satellite signal, and a processor that calculates a position of the work vehicle 100 on the basis of the received signal.

GNSS is a general term for satellite positioning systems such as GPS (Global Positioning System), QZSS (Quasi-Zenith Satellite System: for example, "Michibiki"), GLONASS (Russia), Galileo (Europe), and BeiDou (China).

The positioning device 110 includes an inertial measurement unit (IMU). The IMU measures the inclination and minute movement of the work vehicle 100. If position data based on a satellite signal is complemented using measurement data of the IMU, positioning accuracy can be improved.

The work vehicle 100 includes a LiDAR sensor 140. The LiDAR sensor 140 is installed, for example, at a lower portion of a front surface of the vehicle body 101. The LiDAR sensor 140 may be provided at another position.

The LiDAR sensor 140 repeatedly outputs sensor data indicating a distance and a direction of each measurement point or two-dimensional or three-dimensional coordinate values of each measurement point in an object existing in the surrounding environment while the work vehicle 100 is traveling.

The sensor data output from the LiDAR sensor 140 is processed by the control device of the work vehicle 100.

The control device of the work vehicle 100 can generate an environmental map based on sensor data using an algorithm such as simultaneous localization and mapping (SLAM), for example. The sensor data of the LiDAR sensor 140 is also used for obstacle detection.

The positioning device 110 may use data acquired by the camera 120 or the LiDAR sensor 140 for positioning.

When a feature to be a landmark exists around the work vehicle 100, the position of the work vehicle 100 can be estimated with high accuracy on the basis of the data acquired by the camera 120 or the LiDAR sensor 140 and the environmental map recorded in the storage device.

The work vehicle 100 includes a plurality of obstacle sensors 130. The obstacle sensor 130 is a sensor for detecting surrounding obstacles in automated traveling, and in the example of FIG. 2, the obstacle sensor 130 is installed in front of and behind the cabin 105.

The obstacle sensor 130 may also be disposed at another portion. For example, one or a plurality of obstacle sensors 130 may be provided at any position on a side portion, a front portion, and a rear portion of the vehicle body 101.

The prime mover 102 is, for example, a diesel engine. As the prime mover 102, an electric motor may be employed instead of or in addition to the diesel engine.

The transmission device 103 is a transmission that changes the propulsive force and the moving speed of the work vehicle 100 by switching gear positions. The transmission device 103 can also switch between forward movement and backward movement of the work vehicle 100.

The steering device 106 includes a steering wheel, a steering shaft, and a power steering device that assists steering by an occupant.

When the front wheels 104F are steering wheels, the cutting angle (also referred to as a "steering angle") of the front wheels 104F changes according to the rotation of the steering wheel, and the traveling direction of the work vehicle 100 changes. The power steering device includes a hydraulic device or an electric motor that generates an assist force, and in the case of automated steering, a steering angle is automatically adjusted by the hydraulic device or the electric motor.

A coupling device 108 is provided at the rear of the vehicle body 101. The coupling device 108 includes a three-point support device (also referred to as "three-point link" or " three-point hitch"), a power take-off (PTO) shaft, a universal joint, and a communication cable.

The implement 300 is detachably attached to the coupling device 108. The coupling device 108 moves up and down the three-point link by, for example, a hydraulic device to change the position or posture of the implement 300. Power may be transmitted to the implement 300 by the universal joint.

The work vehicle 100 causes the implement 300 to execute a predetermined work while towing the implement 300. The coupling device 108 may be disposed in front of the vehicle body 101. In this case, an implement is connected in front of the work vehicle 100.

In FIG. 2, a rotary tiller is exemplified as the implement 300. The implement 300 is not limited to tillers, and may be a jeep (seeder), a spreader (fertilizing machine), a transplanter, a mower (grass mower), a rake, a baler (grass raking machine), a harvester, a sprayer, a harrow, or the like.

### [In-vehicle Communication System of Work Vehicle]

FIG. 3 is a block diagram illustrating a configuration example of an in-vehicle communication system of the work vehicle 100.

As illustrated in FIG. 3, the work vehicle 100 communicates with the implement 300 via a communication cable (broken line arrow) included in the coupling device 108. The work vehicle 100 can also communicate with the management terminal 400, the remote terminal 500, and the management server 600 via a network 800.

The work vehicle 100 includes the positioning device 110, the camera 120, the obstacle sensor 130, the LiDAR sensor 140, a sensor group 150 that detects an operating state of the own vehicle, a control system 160, and a communication device 190. These components are communicably connected by a bus.

The work vehicle 100 further includes the operation terminal 200, the operation switch group 210, a buzzer 220, a state detection device 230, and a drive device 240. These components are also communicably connected by a bus.

The positioning device 110 includes a GNSS receiver 111, a RTK receiver 112, an inertial measurement unit (IMU) 115, and a processing circuit 116. The sensor group 150 includes a wheel sensor 152, a cutting angle sensor 154, and an axle sensor 156.

The control system 160 includes a storage device 170 and a control device 180. The control device 180 includes a plurality of electronic control units (ECU) 181 to 186. The implement 300 includes a drive device 340, a control device 380, and a communication device 390.

The GNSS receiver 111 of the positioning device 110 receives satellite signals transmitted from a plurality of GNSS satellites, and generates GNSS data on the basis of the satellite signals.

The GNSS data is generated in a predetermined format such as NMEA 0183, and includes values indicating an identification number, an elevation angle, an azimuth angle, reception strength, and the like of the satellite. The positioning device 110 performs positioning by, for example, real-time kinematic (RTK) -GNSS.

In the RTK-GNSS, a correction signal transmitted by a reference station (not illustrated) is used in addition to a satellite signal from a GNSS satellite. The reference station is installed near a farm field where the work vehicle 100 travels (for example, a position within 1 km from the work vehicle 100).

The reference station generates a correction signal in an RTCM format, for example, on the basis of satellite signals of a plurality of GNSS satellites, and transmits the correction signal to the positioning device 110.

The RTK receiver 112 includes an antenna and a modem, and receives the correction signal from the reference station. The processing circuit 116 corrects the positioning result by the GNSS receiver 111 using the correction signal. When the RTK-GNSS is adopted, positioning with an error of several cm or less can be performed.

The position information of the positioning result includes numerical data of latitude, longitude, and altitude, and is generated by positioning by the RTK-GNSS. The positioning device 110 calculates the position of the work vehicle 100 at a frequency of, for example, about 1 to 10 times per second.

As the positioning method, a positioning method (an interference positioning method, a relative positioning method, or the like) by which relatively highly accurate position information can be obtained may be used in addition to the RTK-GNSS.

For example, the positioning device 110 may perform positioning using a virtual reference station (VRS) or a differential global positioning system (DGPS). When the necessary positional accuracy can be secured without the correction signal of the reference station, the position information may be generated without using the correction signal. In this case, the RTK receiver 112 need not be provided in the positioning device 110.

The IMU 115 includes a three-axis acceleration sensor and a three-axis gyroscope. The IMU 115 may include an orientation sensor, such as a three-axis geomagnetic sensor. The IMU 115 outputs a signal indicating specifications such as acceleration, speed, displacement, and attitude of the work vehicle 100.

The processing circuit 116 can estimate the position and orientation of the work vehicle 100 with higher accuracy by using not only the satellite signal and the correction signal but also the output signal of the IMU 115. In this manner, the output signal of the IMU 115 is used to correct or complement the position of the work vehicle 100.

Therefore, in the example of FIG. 3, the processing circuit 116 can calculate the position of the work vehicle 100 on the basis of the output signals of the GNSS receiver 111, the RTK receiver 112, and the IMU 115.

The processing circuit 116 may further estimate or correct the position of the work vehicle 100 on the basis of the data acquired by the camera 120 or the LiDAR sensor 140. By using the data acquired by the camera 120 or the LiDAR sensor 140, the accuracy of positioning can be further improved.

The camera 120 is an imaging device that captures an image of the environment around the work vehicle 100. The camera 120 includes an image sensor such as a charge coupled device (CCD) or a complementary metal oxide semiconductor (CMOS), an optical system including one or more lenses, and a signal processing circuit.

The camera 120 captures an image of an environment around the work vehicle 100 while the work vehicle 100 is traveling, and generates image (for example, moving image) data.

The camera 120 captures a moving image at a frame rate of 3 fps (frames per second) or more, for example. The image data generated by the camera 120 is transmitted to the management terminal 400 or the remote terminal 510.

Therefore, the management user 410 or the operation user 510 can confirm the environment around the work vehicle 100. The image data generated by the camera 120 may be used for positioning or obstacle detection.

The work vehicle 100 illustrated in FIG. 2 includes a plurality of cameras 120 at different positions of the work vehicle 100, but may include only a single camera.

A visible camera that generates a visible light image and an infrared camera that generates an infrared image may be provided separately. Both the visible camera and the infrared camera may be provided as cameras that generate monitoring images. The infrared camera can also be used to detect obstacles at night.

The obstacle sensor 130 detects an object present around the work vehicle 100. The obstacle sensor 130 includes, for example, a laser scanner or an ultrasonic sonar. The obstacle sensor 130 outputs a signal indicating the presence of an object relatively close to itself.

The plurality of obstacle sensors 130 may be provided at different positions of the work vehicle 100. For example, a plurality of laser scanners and a plurality of ultrasound sonars may be disposed at different positions. In this way, blind spots around the work vehicle 100 can be reduced.

The wheel sensor 152 measures a rotation angle of a steering wheel of the work vehicle 100, and the cutting angle sensor 154 measures a cutting angle of a turning wheel (front wheel 104F).

The measurement values of the wheel sensor 152 and the cutting angle sensor 154 are used for steering control of the control device 180.

The axle sensor 156 measures the rotation speed of the axle at which the tires 104 are connected to shaft ends, that is, the number of revolutions per unit time.

As the axle sensor 156, for example, a sensor using a magnetoresistive element (MR), a Hall element, or an electromagnetic pickup can be adopted. The axle sensor 156 outputs, for example, a numerical value indicating the number of revolutions per minute (unit: rpm). The axle sensor 156 is used to measure the speed of the work vehicle 100.

The drive device 240 includes various devices necessary for traveling of the work vehicle 100 and driving of the implement 300, such as the prime mover 102, the transmission device 103, the steering device 106, and the coupling device 108. The prime mover 102 includes an internal combustion engine such as a diesel engine.

The drive device 240 may include an electric motor for traction instead of or together with the internal combustion engine.

The buzzer 220 is a sound output device that emits a warning sound for notification of abnormality. The sound output device may be a speaker.

The buzzer 220 emits a warning sound when an obstacle is detected during self-driving, for example. The buzzer 220 is controlled by the control device 180.

The state detection device 230 is a device including one or more sensors for detecting an attaching state of the implement 300, deterioration of the implement 300, deterioration of a component of the work vehicle 100, or shortage of a material.

The one or more sensors may include, for example, at least one of an image sensor arranged to be able to image the implement 300, a component of the work vehicle 100, or a material consumed in agricultural work, and a sensor that measures a remaining amount of the material.

The storage device 170 includes one or more storage media such as a flash memory or a magnetic disk. The storage device 170 stores various data generated by the positioning device 110, the camera 120, the obstacle sensor 130, the sensor group 150, the state detection device 230, and the control device 180.

The data stored in the storage device 170 includes an environmental map that is map data in an environment where the work vehicle 100 travels and data of a target path in self-driving.

The environmental map includes information on a plurality of farm fields where the work vehicle 100 performs agricultural works and roads around the farm fields. The environmental map and the target path may be generated by the control device 180 itself or may be generated by a processor 660 of the management server 600.

The storage device 170 also stores a self-driving plan (hereinafter, it may be simply abbreviated as "plan") received by the communication device 190 from the management server 600 and the like.

The self-driving plan may include information indicating a plurality of agricultural works executed by the work vehicle 100 over a plurality of work days. The storage device 170 also stores a computer program for causing each ECU of the control device 180 to execute various operations.

Such a computer program can be provided to the work vehicle 100 via a storage medium (for example, a semiconductor memory, an optical disk, or the like) or a telecommunication line (for example, the Internet).

The control device 180 includes, for example, an ECU group including the following plurality of ECUs.
1) ECU 181 for speed control
2) ECU 182 for steering control
3) ECU 183 for implement control
4) ECU 184 for self-driving control
5) ECU 185 for path creation
6) ECU 186 for state estimation

The ECU 181 controls the prime mover 102, the transmission device 103, and the brake included in the drive device 240. Thus, the speed of the work vehicle 100 is adjusted.

The ECU 181 controls the prime mover 102, the transmission device 103, or the brake on the basis of a command value for speed change to change the speed of the work vehicle 100.

The ECU 182 controls the hydraulic device or the electric motor included in the steering device 106 on the basis of the measurement value of the wheel sensor 152. Thus, the steering angle of the turning wheels is adjusted.

The ECU 182 controls the steering device 106 on the basis of a command value for steering angle change to change the steering angle.

The ECU 183 controls operations of the three-point link, the PTO shaft, and the like included in the coupling device 108 in order to cause the implement 300 to execute a desired operation.

The ECU 183 generates a signal for controlling the operation of the implement 300, and transmits the signal from the communication device 190 to the implement 300.

The ECU 184 performs calculation and control for implementing self-driving on the basis of output signals of the positioning device 110, the steering wheel sensor 152, the cutting angle sensor 154, the axle sensor 156, and the like.

During the self-driving, the ECU 184 transmits the command value for speed change to the ECU 181 and transmits the command value for steering angle change to the ECU 182. The ECU 184 controls the drive device 240 to cause the work vehicle 100 to travel along the target path.

In a case where the target path of the work vehicle 100 is included in the self-driving plan, the ECU 185 records the information in the storage device 170.

In a case where the self-driving plan includes a departure place and a destination, or when the self-driving plan does not include the target path of the work vehicle 100, the ECU 185 calculates, for example, a path for reaching the destination in the shortest time as the target path on the basis of the environmental map including the road information stored in the storage device 170, and records the information in the storage device 170.

The ECU 186 estimates the state of the work vehicle 100 or the implement 300 on the basis of the output signal of the state detection device 230, and determines whether or not preparation work is necessary.

When determining that the preparation work is unnecessary, the ECU 186 determines that the self-driving and the remote driving are possible. That is, the ECU 186 allows reception of the self-driving plan and reception of a request for remote driving.

With the cooperation of the ECUs 181 to 186, the control device 180 can execute self-driving, creation of a target path, and communication with other devices.

During self-driving, the control device 180 controls the drive device 240 on the basis of the position of the work vehicle 100 measured or estimated by the positioning device 110 and the target path stored in the storage device 170. Thus, the control device 180 can cause the work vehicle 100 to travel along the target path.

The plurality of ECUs 181 to 186 included in the control device 180 communicate in accordance with a communication protocol such as a controller area network (CAN). A higher-speed communication scheme such as in-vehicle Ethernet (registered trademark) may be used instead of the CAN.

In FIG. 3, the plurality of ECUs 181 to 186 is illustrated as individual blocks, but the respective functions may be integrated into one ECU. In addition, an in-vehicle computer in which at least some functions of the plurality of ECUs 181 to 186 are integrated may be provided.

The communication device 190 includes a communication interface that performs, for example, transmission and reception of a signal conforming to the ISOBUS standard with the communication device 390 of the implement 300.

Accordingly, it is possible to cause the implement 300 to execute a desired operation and to acquire information from the implement 300.

The communication device 190 also includes a communication interface that executes transmission and reception of signals via the network 800 with the respective communication devices of the management terminal 400, the remote terminal 500, and the management server 600.

The network 800 includes, for example, a cellular mobile communication network such as 3G, LTE, or 5G, and the Internet.

The operation terminal 200 is a terminal for executing an operation related to traveling of the work vehicle 100 and the implement 300. This is also referred to as a virtual terminal (VT).

The operation terminal 200 is, for example, a tablet-type terminal device including a display device such as a touch screen and/or one or more operation buttons. The display device is, for example, a display such as a liquid crystal or an organic light emitting diode (OLED).

The occupant can execute various operations such as switching on/off of the self-driving mode, recording or editing of the environmental map, setting of the target path, and switching on/off of the implement 300 by the operation terminal 200.

At least a part of these operations can also be performed by an operation on the operation switch group 210. The operation terminal 200 can also be configured to be detachable from the work vehicle 100. In this case, the removed operation terminal 200 communicates with the communication device 190 by a short-distance communication method.

Therefore, when the operation terminal 200 removed from the work vehicle 100 is used, the operation user 510 at a location away from the work vehicle 100 can remotely operate the work vehicle 100.

Therefore, the user who remotely operates the work vehicle 100 may correspond to not only the operation user 510 who uses the remote terminal 500 but also a user who remotely operates the work vehicle 100 with the operation terminal 200 removed from the work vehicle 100.

The drive device 340 of the implement 300 performs an operation necessary for the implement 300 to execute a predetermined work. The drive device 340 includes a device according to the application of the implement 300, for example, a hydraulic device, an electric motor, or a pump.

The control device 380 controls the operation of the drive device 340. The control device 380 causes the drive device 340 to execute various operations in response to a signal transmitted from the work vehicle 100 via the communication device 390.

### [Structural Example of Virtual Terminal]

FIG. 4 is a perspective view illustrating an example of the operation terminal 200 and the operation switch group 210 installed inside the cabin 105. The switch group 210 including a plurality of switches operable by a user is disposed inside the cabin 105.

The operation switch group 210 includes a selection switch of a gear stage of a main shift or a sub-shift, a mode switching switch such as a self-driving mode and a manual driving mode, a front-rear switch for switching between forward movement and backward movement, a lifting switch for lifting or lowering the implement 300, and the like.

### [Internal Configurations of Management Apparatus, Management Terminal, and Remote Terminal]

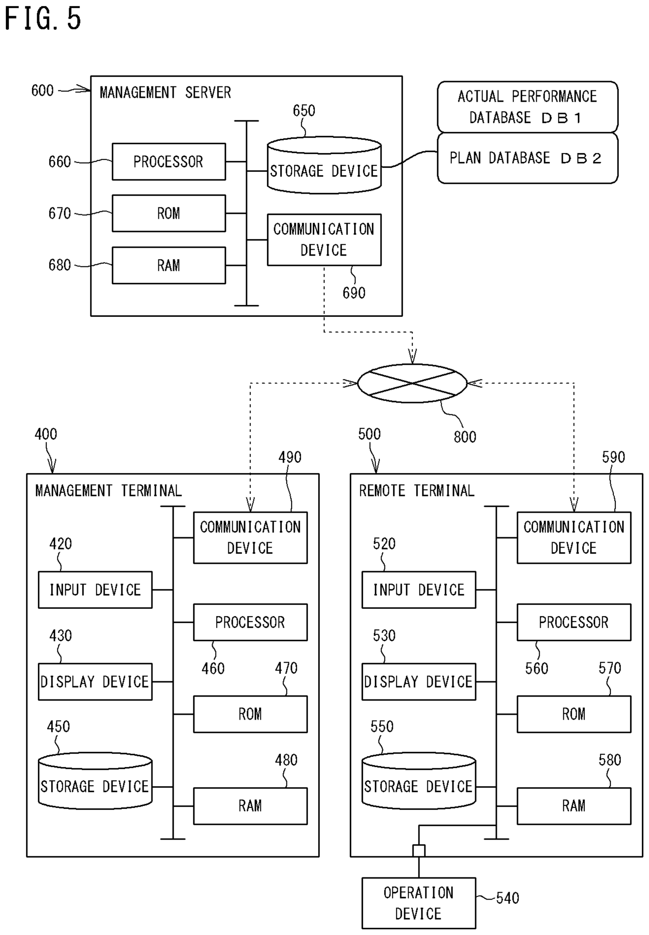

FIG. 5 is a block diagram illustrating an example of internal configurations of the management server 600, the management terminal 400, and the remote terminal 500.

As illustrated in FIG. 5, the management server 600 includes a storage device 650, the processor (processing device) 660, a read only memory (ROM) 670, a random access memory (RAM) 680, and a communication device 690. These components are communicatively connected via a bus.

The storage device 650 is, for example, a magnetic storage device or a semiconductor storage device that mainly functions as a storage of a database. An example of the magnetic storage device is a hard disk drive (HDD), and an example of the semiconductor storage device is a solid state drive (SSD).

The storage device 650 may be a separate device separated from the housing of the management server 600. For example, the storage device 650 may be a storage device connected to the management server 600 via the network 800, for example, a ground storage.

The processor 660 is, for example, an integrated circuit having a central processing unit (CPU). Specifically, in addition to the CPU, the processor 660 includes a field programmable gate array (FPGA), a graphics processing unit (GPU), an application specific integrated circuit (ACIC), an application specific standard product (ASSP), or a combination of two or more integrated circuits selected from these. The processor 660 executes a computer program stored in the ROM 670 to implement predetermined processing.

The ROM 670 is, for example, a writable memory (for example, PROM), a rewritable memory (for example, flash memory), or a read-only memory.

The ROM 670 stores a program for controlling the operation of the processor 660. The ROM 670 is not limited to a single storage medium, and may be an aggregate of a plurality of storage media. A portion of the aggregate of a plurality of storage media may be a removable memory.

The RAM 680 provides a work area in which the computer program stored in the ROM 670 is once developed at the time of startup. The RAM 680 is not limited to a single storage medium, and may be an aggregate of a plurality of storage media.

The communication device 690 is a communication module for communicating with the work vehicle 100, the management terminal 400, and the remote terminal 500 via the network 800.

The communication device 690 can perform wired communication conforming to a communication standard such as IEEE 1394 (registered trademark) or Ethernet (registered trademark).

The communication device 690 may perform wireless communication based on the Bluetooth (registered trademark) standard or the Wi-Fi standard, or cellular mobile communication such as 3G, 4G, or 5G.

As illustrated in FIG. 5, the storage device 660 includes an actual performance database DB1 and a plan database DB2.

The actual performance database DB1 is a storage area of actual performance data received from an agricultural machine such as the work vehicle 100. The actual performance data is classified, for example, for each identification information of the agricultural machine and stored in the actual performance database DB1. The plan database DB2 is a storage area for data for planning necessary for creating a self-driving plan. The data for planning is, for example, divided into static data and dynamic data and stored in the plan database DB2.

As illustrated in FIG. 5, the management terminal 400 includes an input device 420, a display device 430, a storage device 450, a processor (processing device) 460, a ROM 470, a RAM 480, and a communication device 490. These components are communicatively connected via a bus.

The input device 420 is a device that receives an input operation of the management user 410, and is, for example, a keyboard, a mouse, a touch panel, or the like. The display device 430 is, for example, a liquid crystal display or an organic EL display.

Since the contents of the processor 460, the ROM 470, the RAM 480, the storage device 450, and the communication device 490 of the management terminal 400 are substantially the same as those of the management server 600, detailed description thereof will be omitted.

As illustrated in FIG. 5, the remote terminal 500 includes an input device 520, a display device 530, a storage device 550, a processor (processing device) 560, a ROM 570, a RAM 580, and a communication device 590. These components are communicatively connected to each other via a bus.

The input device 520 is a device that receives an input operation of the operation user 510, and is, for example, a keyboard, a mouse, a touch panel, or the like. The display device 530 is, for example, a liquid crystal display or an organic EL display.

The contents of the processor 560, the ROM 570, the RAM 580, the storage device 550, and the communication device 590 of the remote terminal 500 are substantially the same as those of the management server 600, and thus detailed description thereof will be omitted.

The operation device 540 used for remote driving of the work vehicle 100 is connected to the remote terminal 500. The operation device 540 is an emulator of an actual driving operation for the work vehicle 100, and includes an operation device (steering or the like) equivalent to or similar to manual driving.

The operation device 540 also includes an interface capable of performing the same operation as the operation terminal 200 and the operation switch group 210. Therefore, the operation user 510 who uses the remote terminal 500 can issue an instruction to change the manual driving and the self-driving by remote control.

### [Procedure for Creating Self-Driving Plan]

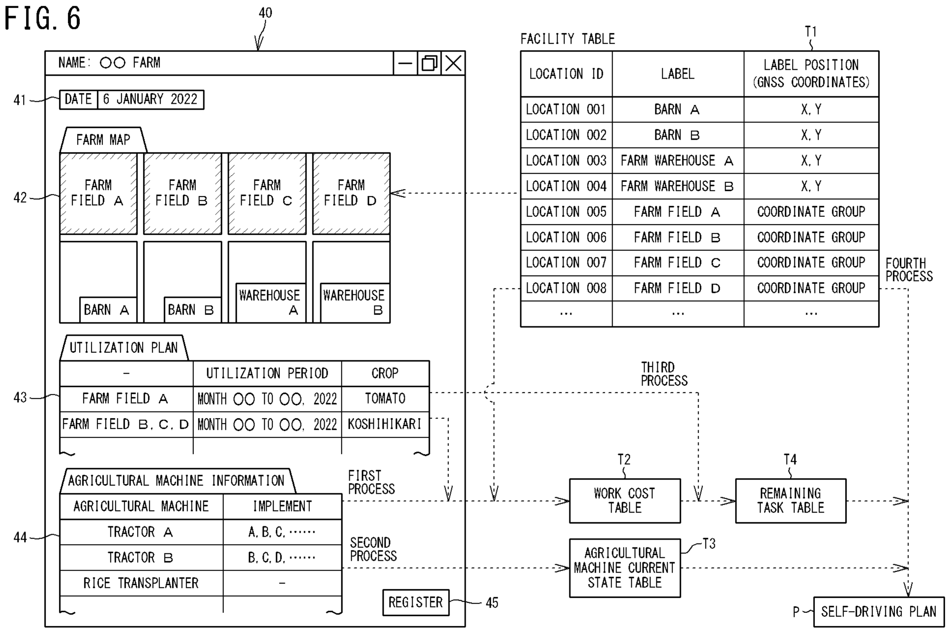

FIG. 6 is an explanatory diagram illustrating an example of a setting screen 40 of information necessary for creating a self-driving plan P and information processing.

The setting screen 40 of FIG. 6 is displayed on the display device 430 of the management terminal 400 in order to receive the input of the setting information by the management user 410. Specifically, the processor 660 of the management server 600 instructs the management terminal 400 to display the setting screen 40 of FIG. 6 in response to the creation request from the management terminal 400 that has logged in.

As illustrated in FIG. 6, the setting screen 40 includes, for example, items such as a date display unit 41, a farm map 42, a utilization plan 43, agricultural machine information 44, and a register button 45.

The date display unit 41 is an item for displaying the date of the day when the setting screen 40 is opened. The farm map 42 is an item on which a digital map of real estate (for example, a farm field, a barn, an agricultural machine warehouse, and the like) included in a farm managed by the management user 410 is displayed.

The storage device 650 of the management server 600 stores the facility table T1 in which the facility data of the farm managed by the management user 410 is recorded. The facility table T1 is registered in advance in the storage device 650 of the management server 600 by a setting screen different from that of FIG. 6.

In this case, the processor 660 of the management server 600 transmits the position information of each facility included in the facility table T1 to the management terminal 400. The processor 460 of the management terminal 400 acquires a digital map corresponding to received position information from a map distribution server or the like, and displays the acquired digital map in a frame of the farm map 42.

The facility table T1 is, for example, data in a matrix format in which "label" and "label position" are defined for each predetermined location ID. "Label" represents a type of real estate included in the farm, and "label position" represents position information (GNSS coordinates) of the real estate.

GNSS coordinate values (latitude value, longitude value, and the like) are written at label positions of the barn and the agricultural warehouse. In the label position of the farm field, a series of coordinate groups capable of specifying a boundary line representing the extension of the farm field is described, and the series of coordinate groups includes, for example, GNSS coordinate values (latitude value, longitude value, and the like) of point groups arranged at predetermined intervals along the extension of the farm field.

The utilization plan 43 is an item for defining the utilization plan of the farm assumed by the management user 410. The utilization plan 43 includes, for example, a use period of the farm fields A to D included in the farm, a type of crops cultivated in each of the farm fields A to D within the use period, and the like.

In the example of FIG. 6, "tomato" is set as the crop to be cultivated in the farm field A, and "Koshihikari" is set as the crop to be cultivated in the farm fields B, C, and D.

The agricultural machine information 44 is an item for setting a type of an agricultural machine that can be used in a farm (such as the tractor 100 and a rice transplanter), and an implement 300 that can be attached to the tractor 100. The register button 45 is a button for instructing transmission of the input setting information.

The setting information input to the utilization plan 43 and the agricultural machine information 44 is transmitted to the management server 600. Based on the received setting information, the processor 660 of the management server 600 creates the self-driving plan P for each agricultural machine defined in the agricultural machine information 44 in accordance with the utilization plan 43 formulated by the management user 410.

The processor 660 of the management server 600 temporarily stores the created self-driving plan P of each agricultural machine in the plan database DB2 of the storage device 650.

In response to a transmission request from an agricultural machine having a predetermined agricultural machine ID, the processor 660 of the management server 600 extracts the self-driving plan P related to the agricultural machine ID of the transmission source from the storage device 650 from the plan database DB2, and transmits the extracted self-driving plan P to the agricultural machine ID.

As illustrated in FIG. 6, the process of creating the self-driving plan P performed by the processor 660 of the management server 600 includes the following first process to fourth process.

| | |
|---|---|
| First process: | Creation of work cost table T2 |
| Second process: | Creation of agricultural machine current state table T3 |
| Third process: | Creation of remaining task table T4 |
| Fourth process: | Calculation of self-driving plan P |

The contents of the first to fourth processes will be described below.

### (First process)

The first process is a process of creating a "work cost table T2" summarizing work cost data related to the cost of each work that can be performed on the farm on the basis of the utilization plan 43, the agricultural machine information 44, and the facility data (facility table T1) set by the management user 410.

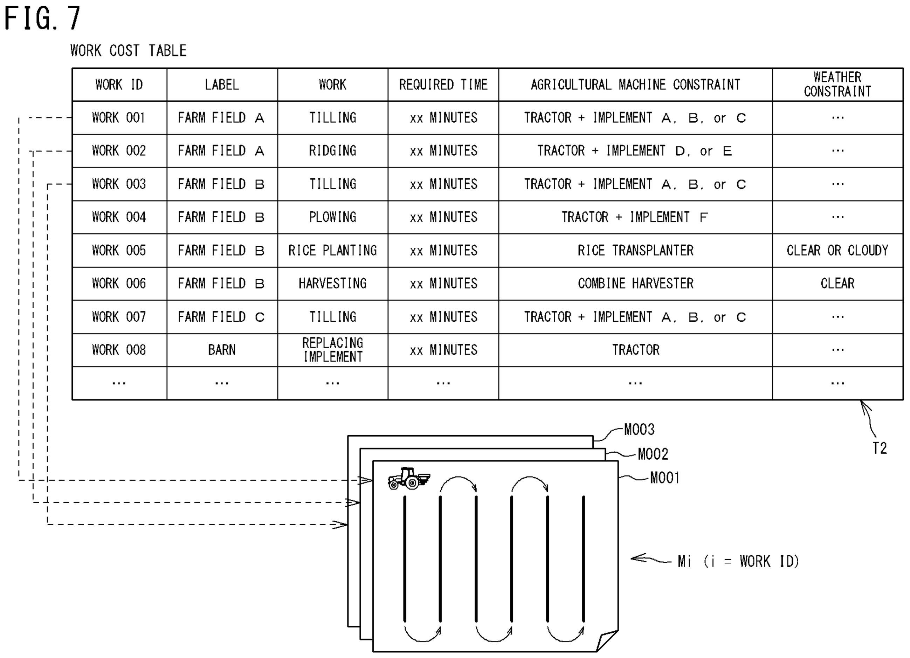

FIG. 7 is a diagram illustrating an example of the work cost table T2. As illustrated in FIG. 7, the work cost table T2 includes, for example, data in a matrix format in which "label", "work", "required time", "agricultural machine constraint", and "weather constraint" are defined for each work ID.

In the work cost table T2, the type of real estate included in the label of the facility table T1 is written in "label". In the "work", the type of work (for example, tilling and ridging) required for cultivation of the crop set in the utilization plan 43 is described for each label.

In the "required time", the work time required for each work is described. The work time of the farm field is calculated on the basis of the area of the farm field specified from the facility table T1. In the "agricultural machine constraint", an implement required for work and a type of agricultural machine are written. In the "weather constraint", types of weather in which work in the farm field can be executed is described.

As illustrated in FIG. 7, a farm field map Mi (i is a work ID) is associated with the work ID of the farm field. In the farm field map Mi, a standard target path in a case where the work vehicle 100 performs work travel by self-driving is defined for each type of work performed in the farm field.

For example, in the example of FIG. 7, the target path of each farm field map i is as follows.

| | |
|---|---|
| Farm Field Map M001: | Target path of work traveling in case of tilling farm field A |
| Farm Field Map M002: | Target path of work traveling in case of ridging farm field A |
| Farm Field Map M003: | Target path of work traveling in case of tilling farm field B |

### (Second process)

The second process is a process of creating the "agricultural machine current state table T3" summarizing the agricultural machine current state data related to the current state of the agricultural machine included in the agricultural machine information 44 on the basis of the agricultural machine information 44 set by the management user 410.

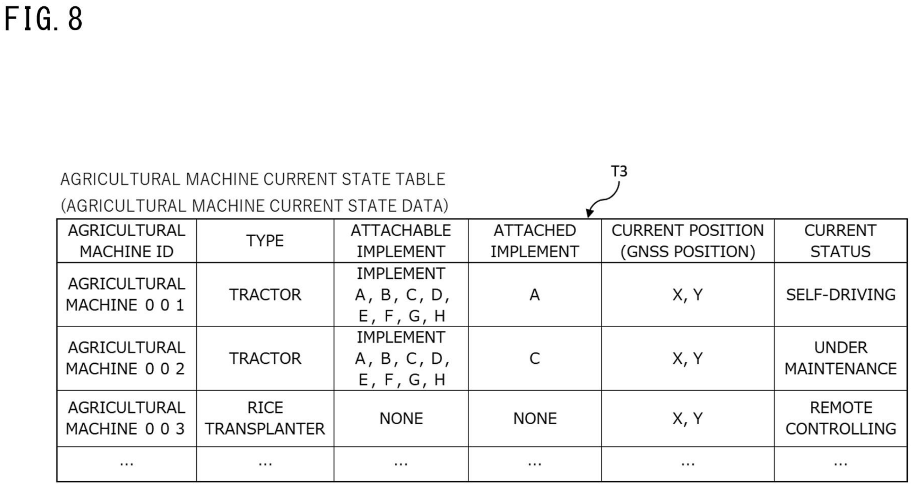

FIG. 8 is a diagram illustrating an example of the agricultural machine current state table T3. As illustrated in FIG. 8, the agricultural machine current state table T3 includes, for example, data in a matrix format in which "type", "attachable implement", "currently attached implement", "current position (GNSS position)", and "current status" are defined for each agricultural machine ID.

In the agricultural machine current state table T3, the type of the agricultural machine set in the agricultural machine information 44 is written in the "type". In the "attachable implement", identification information of the implement 300 that can be attached to an agricultural machine (tractor 100) requiring the implement 300 is described.

Identification information of the implement 300 currently attached to the tractor 100 is described in the "attached implement". In the "current position", current position information of the agricultural machine is written. In the "current status", a current driving mode (self-driving, remote driving, or the like) of the agricultural machine is described. The management server 600 inquires of the agricultural machine to acquire the identification information of the attached implement 300, the position information of the agricultural machine, and the driving mode.

### (Third process)

The third process is a process of creating a "remaining task table T4" summarizing remaining task data related to the progress status of the task constituting the self-driving plan P on the basis of the utilization plan 43 and the work cost data (work cost table T3) set by the management user 410.

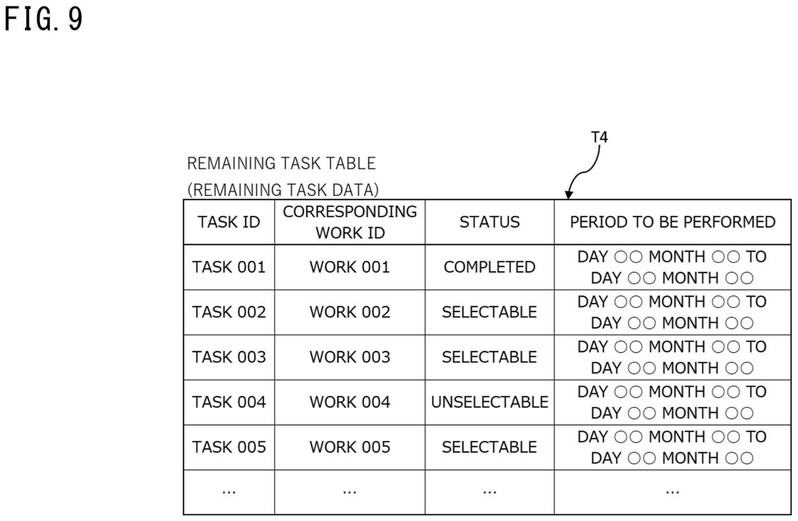

FIG. 9 is a diagram illustrating an example of the remaining task table T4. As illustrated in FIG. 9, the remaining task table T4 includes, for example, data in a matrix format in which "corresponding work ID", "status", and "period to be implemented" are defined for each task ID.

In the remaining task table T4, in the "corresponding work ID", the work ID of the work cost table T3 associated with the task ID is written.

In the "status", information (for example, "completed", "selectable", or "unselectable") that can identify completion or incompletion of the task is written. Here, "completed" means completion of the task. "Selectable" means that the task is selectable because it is incomplete.

"Unselectable" means that the task is incomplete but cannot be selected as a task to be included in the self-driving plan due to a predetermined constraint condition such as weather.

The processor 660 of the management server 600 monitors the status of the task ID in the remaining task table T3, and changes the status of the task ID in which the task is completed to completed when any task among the plurality of task IDs of which the status is selectable is completed.

In the "period to be implemented", a start date and an end date of the task are described. The processor 660 of the management server 600 determines a period in which the task is to be implemented within the range of the utilization period defined in the utilization plan 43. For example, the storage device 650 of the management server 600 stores an execution timing suitable for the work (for example, the timing of ridging) for each type of crop.

In this case, the processor 660 of the management server 600 adopts a preferable execution timing read from the storage device 650 as a period to be described in the period to be implemented in the remaining task table T4.

### (Fourth process)

The fourth process is a process of calculating the self-driving plan P for each agricultural machine ID on the basis of the facility data (the facility table T1), the agricultural machine current state data (the agricultural machine current state table T3), and the remaining task data (the remaining task table T4).

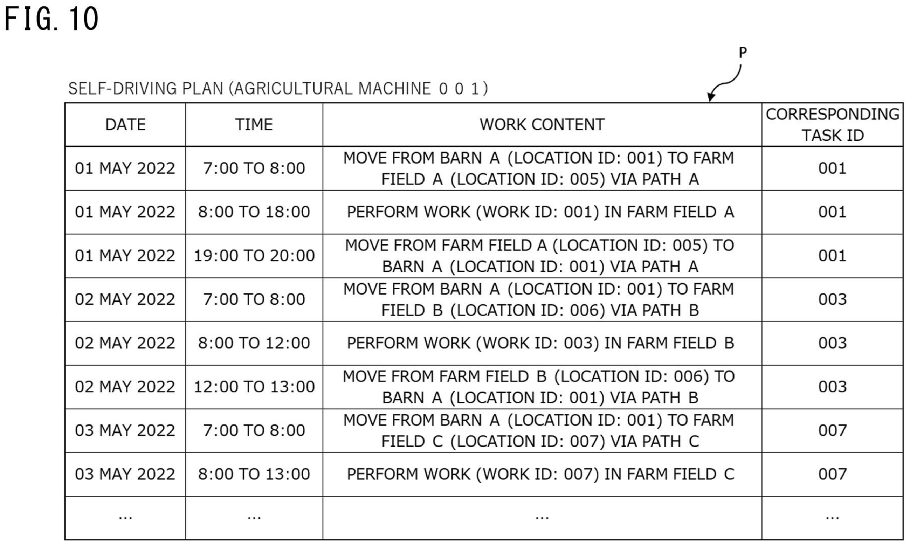

FIG. 10 is a diagram illustrating an example of a self-driving plan P related to one agricultural machine. As illustrated in FIG. 10, the self-driving plan P of the agricultural machine (here, it is assumed that the agricultural machine ID is "001") includes, for example, data in a matrix format in which "date", "time", "work content", and "response task ID" are defined.

In the self-driving plan P, the date on which the agricultural machine 001 performs the self-driving is written in the "date". In the "time", a time slot in which the agricultural machine 001 performs the self-driving is written.

In the "work content", the content of the self-driving performed by the agricultural machine 001 is described. In the "corresponding task ID", the task ID of the remaining task table T4 associated with the work content is written.

In the fourth process, the processor 660 of the management server 600 calculates the self-driving plan P for completing the task of the remaining task table T4 within the period in which the task is to be implemented.

Specifically, the processor 660 sets, as the self-driving plan P of the agricultural machine 001, a combination in which the predetermined cost is minimized among all combinations of the predetermined explanatory variables under a constraint condition that is within the period to be implemented in the remaining task table T4.

Furthermore, in a case where there are constraints on the work, such as the execution timing (season, or the like) and the weather, the processor 660 also adopts the constraints as the constraint conditions.

As the explanatory variable, for example, a moving time required for movement between farm fields and a required time defined in the work cost table T2 (for example, a required time for farm field work) can be adopted.

In this case, the processor 660 sets the combination of the path and the work ID in which the total value of the moving time and the required time of the agricultural machine 001 is minimized as the self-driving plan P of the agricultural machine 001.

The moving distance of the agricultural machine can also be adopted as the explanatory variable. In this case, the processor 660 sets, as the self-driving plan P, a combination of the path and the work ID in which the total value of the moving distance is the smallest among all paths that can pass from the current position of the agricultural machine to the target point.

When the agricultural machine is the tractor 100, the number of times of implement replacement may be employed as the explanatory variable. In this case, the processor 660 sets the combination of the path and the work ID with which the number of times of replacement of the implement 300 is minimized as the self-driving plan P of the agricultural machine 001.

### [Switching Process of Driving Mode by Work Vehicle]

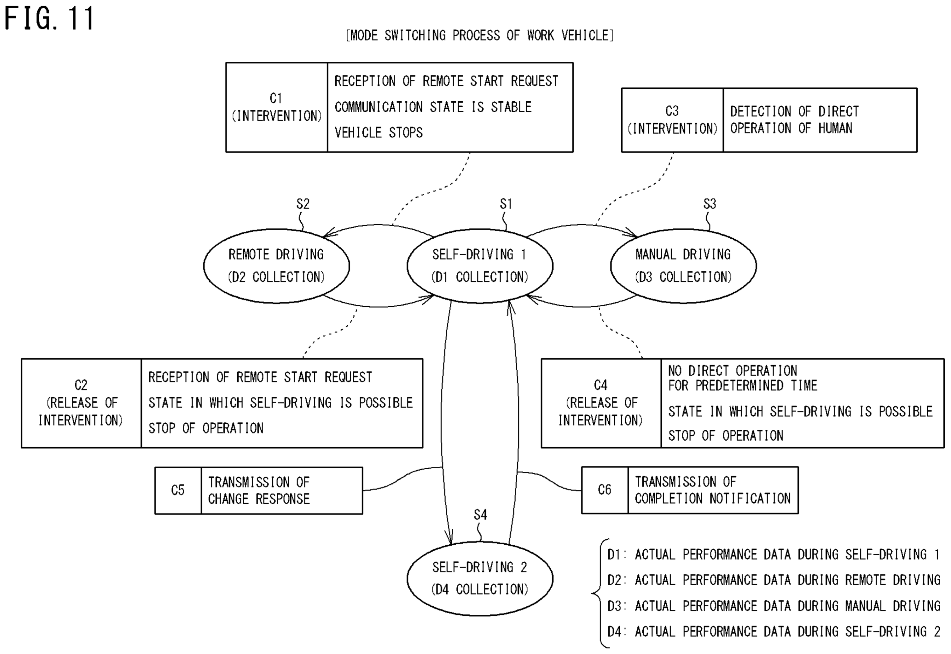

FIG. 11 is a state transition diagram illustrating an example of driving mode switching processing executed by the control device (electronic control unit) 180 of the work vehicle 100. As illustrated in FIG. 11, the control status of the driving mode includes the following states S1 to S4. Note that the following "plan P1" is a self-driving plan created by the management server 600, and the following "plan P2" is a self-driving plan created by the remote terminal 500.

| | |
|---|---|
| State S1: | Self-driving 1 (self-driving based on plan P1) |
| State S2: | Remote driving |
| State S3: | Manual driving |
| State S4: | Self-driving 2 (self-driving based on plan P2) |

The switching from the state S1 to the state S2 is triggered by the satisfaction of a condition C1. The condition C1 is a type of "intervention" for the self-driving according to the self-driving plan P.

The condition C1 includes at least reception of a remote start request, stabilization of a communication state, and stop of operation of the work vehicle 100.

The remote start request is a communication message transmitted from the remote terminal 500 to the work vehicle 100 to request the work vehicle 100 to start remote driving.

The stability of the communication state is determined by, for example, an amount of a received signal strength indicator (RSSI), a signal noise rate (SNR), a bit error rate, or the like measured by the communication device 190.

The stop of the operation of the work vehicle 100 means that the work vehicle 100 is not traveling and the implement 300 is not driven in a state where an IG power supply is turned on.

The stop of the operation of the work vehicle 100 is determined based on, for example, the amount of the time length in which the current speed is zero and the presence or absence of a brake operation.

The switching from the state S2 to the state S1 is triggered by the satisfaction of a condition C2. The condition C2 is a type of "intervention" for self-driving in accordance with the self-driving plan P.

The condition C2 includes at least reception of a remote driving end request, a state in which self-driving is possible, and stop of operation of the work vehicle 100.

The remote driving end request is a communication message transmitted from the remote terminal 500 to the work vehicle 100 to request the work vehicle 100 to end the remote driving.

The state in which the self-driving is possible can be determined, for example, when the state estimating ECU 186 determines that the preparation work is unnecessary. The method for determining stop of operation is the same as described above.

The switching from the state S1 to the state S3 is triggered by the satisfaction of a condition C3. The condition C3 is a type of "intervention" for the self-driving according to the self-driving plan P.

The condition C3 includes at least detection of a direct operation by a human on board.

The direct operation includes, for example, at least one operation intentionally and physically executed by an occupant who attempts to drive the work vehicle 100, such as a brake pedal operation, an accelerator pedal operation, and a steering operation.

The switching from the state S3 to the state S1 is triggered by the satisfaction of a condition C4. The condition C4 is a type of "release of intervention" for self-driving in accordance with the self-driving plan P.

The condition C4 includes at least non-detection for a predetermined time (for example, 20 seconds) of direct operation, a state in which self-driving is possible, and a stop of traveling. A method for determining whether or not self-driving is possible and a method for determining traveling are similar to those described above.

The switching from the state S1 to the state S4 is triggered by the satisfaction of a condition C5. The condition C5 is, for example, transmission of a "change response". The change response is a response message to the remote terminal 500 that is a transmission source of the change request from the plan P1 to the plan P2.

The switching from the state S4 to the state S1 is triggered by the satisfaction of a condition C6. The condition C6 is, for example, transmission of a "completion notification". The completion notification is a message for notifying the remote terminal 500, which is the transmission source of the request for changing the plan P2, of the completion of the self-driving according to the plan P2.

In FIG. 11, data D1 is actual performance data collected by the control device 180 during the period of self-driving 1 (self-driving according to the plan P1 of the management server 600). Data D2 is actual performance data collected by the control device 180 during the manual driving period.

Data D3 is actual performance data collected by the control device 180 during the remote driving period. Data D4 is actual performance data collected by the control device 180 during the period of the self-driving 2 (self-driving according to the plan P2 of the remote device 500).

The pieces of actual performance data D1 to D4 are transmitted to the management apparatus 600. The transmission cycle of the pieces of the actual performance data D1 to D4 may be every predetermined time (for example, several seconds to several minutes), or the actual performance data of the previous mode may be transmitted at a time after the driving mode is switched.

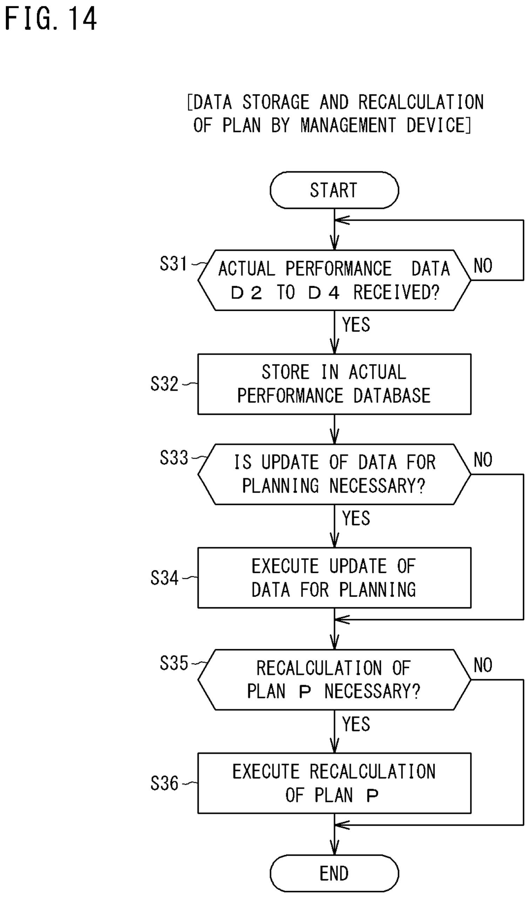

The processor 660 of the management apparatus 600 stores the received actual performance data D1 to D4 in the actual performance database DB1 of the storage device 650. Furthermore, the processor 660 can also use the pieces of the actual performance data D2 to D4 for updating the data for planning and the like (see FIG. 14).

### [Communication Sequence of Plan Change]

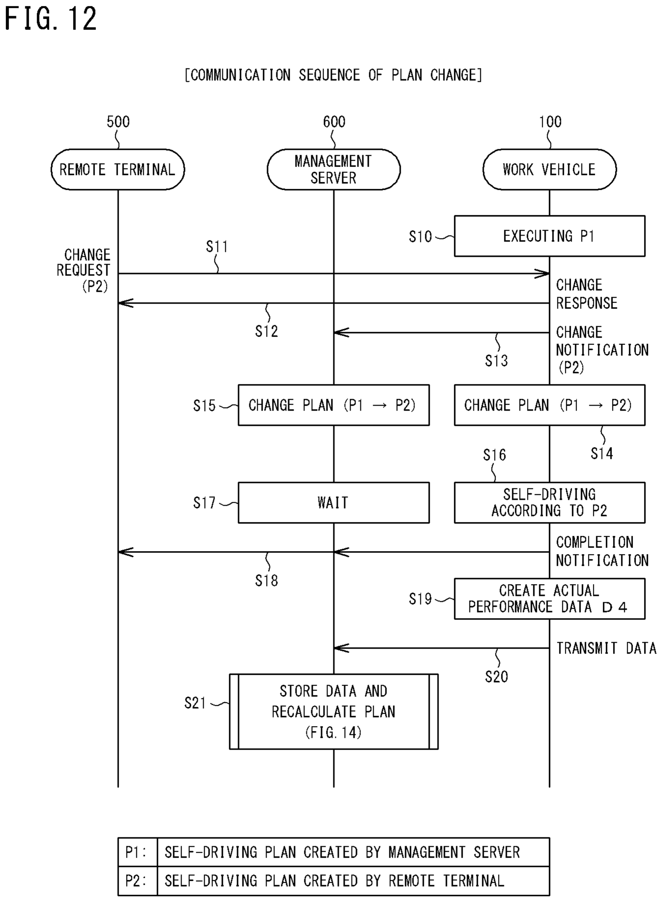

FIG. 12 is a sequence diagram illustrating an example of a communication sequence of plan change executed among the management terminal 400, the management server 600, and the work vehicle 100.

In FIG. 12, "P1" is the self-driving plan created by the management server 600, and "P2" is the self-driving plan created by the remote terminal 500. In the following description, the remote terminal 500, the management server 600, and the work vehicle 100 will be described as execution subjects, but actual execution subjects are the processor 460, the processor 660, and the control device 180.

As illustrated in FIG. 12, here, it is assumed that, when the work vehicle 100 is executing self-driving according to the plan P1 (step S10), the remote terminal 500 transmits a message of a change request including the plan P2 to the work vehicle 100 (step S11).

In this case, the work vehicle 100 transmits a message of a change response to the remote terminal 500 (step S12), and transmits a message of a change notification including the plan P2 to the management server 600 (step S13).

Next, the work vehicle 100 changes the self-driving plan to be referred to from the plan P1 to the plan P2 (step S14), and performs self-driving according to the plan P2 (step S16).

The management server 600 that has received the message of the change notification changes the self-driving plan from the plan P1 created by itself to the notified plan P2 (step S17), and waits for completion of the plan P2 (step S17).

Next, when the self-driving according to the plan P2 is finished, the work vehicle 100 transmits a completion notification message to the remote terminal 500 and the management server 600 (step S18).

Thereafter, the work vehicle 100 creates the actual performance data D4 (step S19), and transmits the created actual performance data D4 to the management server 600 (step S20).

The actual performance data D4 is actual performance data collected by the control device 180 of the work vehicle 100 during the self-driving period according to the plan P2 created by the remote terminal 500.

The management server 600 stores the received actual performance data D4 in the actual performance database DB1 of the storage device 650, and executes recalculation of the self-driving plan P as necessary (step S21: see FIG. 14).

### [Example of Work Change Accompanying Plan Change]

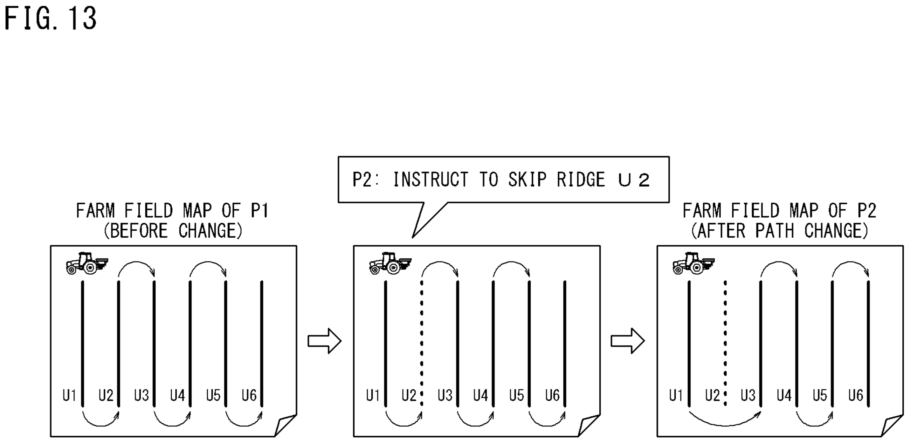

FIG. 13 is an explanatory diagram illustrating a change example of the farm field work accompanying the plan change.

In the example of FIG. 13, the plan P1 of the management server 600 includes a task of sequentially ridging the ridges U1 to U6 of the farm field, and the plan P2 of the remote terminal 500 includes a task of skipping the second ridge U2 and moving from the ridge U1 to the ridge U3.

In this case, the control device 180 of the work vehicle 100 creates a target path for working and traveling in the farm field according to the task of the plan P2, and controls the work vehicle 100 to move along the created target path. In addition, the control device 180 collects the actual performance data D4 during work traveling.

Therefore, the actual performance data D4 collected by the control device 180 is data including movement track data collected during work travel on a path where the ridge U2 is skipped.

### [Data Storage and Update by Management Apparatus]

FIG. 14 is a flowchart illustrating an example of data storage and update by the management server 600.

As illustrated in FIG. 14, the processor 660 of the management server 600 monitors whether or not the pieces of the actual performance data D2 to D4 are received from the work vehicle 100 (step S31), and stores the received pieces of the actual performance data D2 to D4 in the actual performance database DB1 of the storage device 650 (step S32).

As described above, the actual performance data D2 is actual performance data during the remote driving period. The actual performance data D3 is actual performance data during the manual driving period. The actual performance data D4 is actual performance data during the self-driving period according to the self-driving plan P2 created by the remote terminal 500.

Note that the processor 660 also stores the actual performance data D1 during the self-driving period according to the self-driving plan P1 created by itself in the actual performance database DB1 of the storage device 650.

Next, the processor 660 determines the presence or absence of data that needs to be updated among the data managed in the plan database DB2 (step ST33).

Specifically, the processor 660 determines whether or not it is necessary to update the dynamic data among the static data and the dynamic data managed by the plan database DB2. This is because the static data is data whose data content does not change even when the driving mode changes.

When the determination result in step S33 is positive, the processor 660 updates the data for planning (step S34). Specifically, the processor 660 updates the dynamic data determined to need to be updated.

When the determination result in step S33 is negative, the processor 660 skips step S34 and advances the processing.

Next, the processor 660 determines whether recalculation of the self-driving plan P is necessary (step ST35). This determination is made, for example, based on whether or not the dynamic data has been updated. Alternatively, the transmission request of the self-driving plan from the work vehicle 100 may be used as the weighting condition.

When the determination result in step S35 is positive, the processor 660 recalculates the self-driving plan P (step S35). Specifically, the processor 660 uses the updated dynamic data for recalculation of the plan P. When the determination result of step S35 is negative, the processor 660 skips step S36 and ends the processing.

### [Specific Example of Work Change After Intervention]

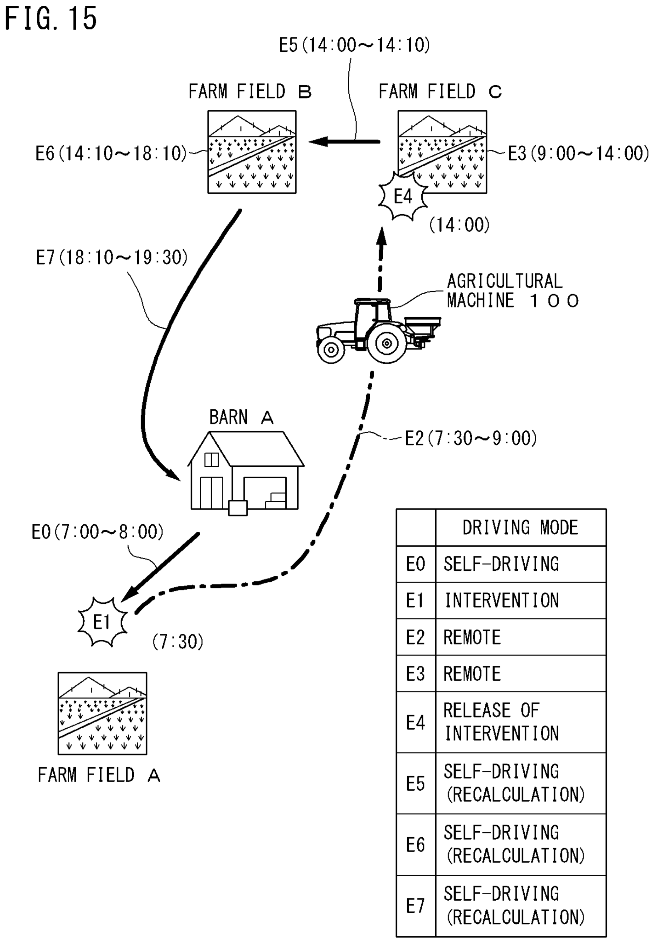

FIG. 15 is an explanatory diagram illustrating an example of work change after intervention of remote driving.

Here, it is assumed that the following events E1 to E7 occur while the work vehicle 100 (hereinafter referred to as an "agricultural machine 100") having the agricultural machine ID "100" that has acquired the self-driving plan P of FIG. 10 is executing self-driving (event E0) of the first task (moving from the barn A to the farm field A from 7:00 to 8:00).

| | |
|---|---|
| Event E1: | Receive remote start request at 7:30 (intervention) |
| Event E2: | Move to farm field C by remote driving from 7:30 to 9:00 |
| Event E3: | Perform work in farm field C by remote driving from 9:00 to 14:00 |
| Event E4: | Receive remote driving end request at 14:00 (release of intervention) |
| Event E5: | Move from farm field C to farm field B by self-driving from 14:00 to 14:10 |
| Event E6: | Perform work in farm field B by self-driving from 14:10 to 18:10 |
| Event E7: | Move from farm field B to barn A by self-driving from 18:10 to 19:30 |

Here, it is assumed that the remote driving end request (event E4) is notified to the management apparatus 600 directly or via the agricultural machine 100, and the agricultural machine 100 acquires the self-driving plan P recalculated by the management apparatus 600 immediately after the event E4.

As illustrated in FIG. 15, the agricultural machine 100 after the generation of E1 moves from the generation point of E1 to the farm field C by remote driving (E2), and performs predetermined work on the farm field C by remote driving of the operation user 510 (E3).

The agricultural machine 100 after the occurrence of E4 moves from the farm field C to the farm field B by self-driving according to the self-driving plan P newly acquired from the management apparatus 600 (E5), and performs predetermined work on the farm field B by the self-driving (E6).

Thereafter, the agricultural machine 100 moves from the farm field B to the barn A by self-driving according to the self-driving plan P newly acquired from the management apparatus 600 (E7).

### [Update Example of Data for Planning]

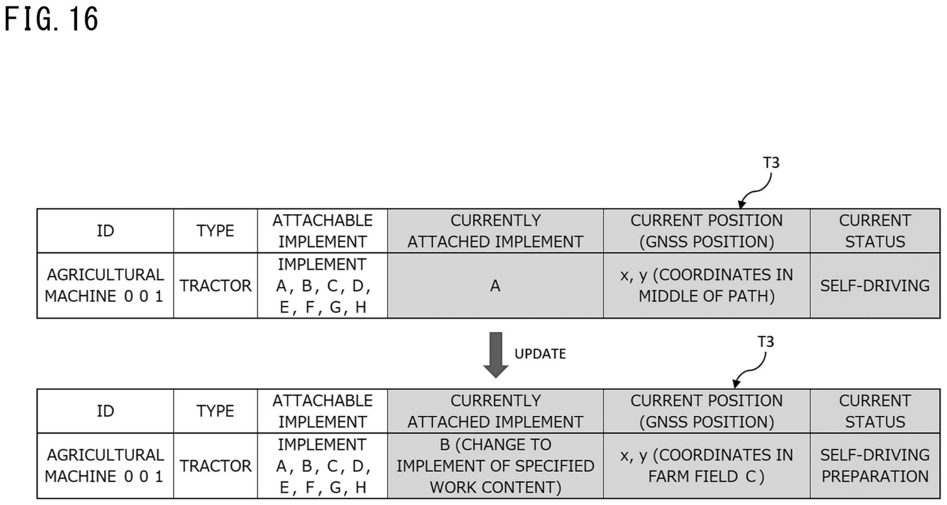

FIG. 16 is an explanatory diagram illustrating an update example of the agricultural machine current state table T3 performed due to the event E4 in FIG. 15.

As described above, since the event E4 in FIG. 15 is the work in the farm field C by the remote driving, the current position of the agricultural machine 100 is in the farm field C, and the driving mode of the agricultural machine 100 is the remote driving.

Therefore, the current position of the agricultural machine current state table T3 is updated from coordinate values in the middle from the barn A to the farm field A to coordinate values in the farm field C, and the current status of the agricultural machine current state table T3 is updated from during the self-driving to, for example, during the self-driving preparation.

The actual performance data D2 collected by the agricultural machine 100 includes not only movement actual performance data but also measurement actual measurement data and control actual performance data. Therefore, the processor 660 of the management apparatus 600 may estimate the work content in the farm field C by the remote work from, for example, the presence or absence of PTO use, the presence or absence of double speed use, the history of the GNSS position, and the like.

In addition, by notifying the management apparatus 600 of the work content by the remote work from the operation input to the remote terminal 500 by the operation user 510, the processor 660 of the management apparatus 600 can directly specify the work content in the farm field C.

In this manner, when the processor 660 can specify the work content of the farm field C by the remote work, it is only required to change the currently attached implement of the agricultural machine current state table T3 to the implement corresponding to the specified work content.

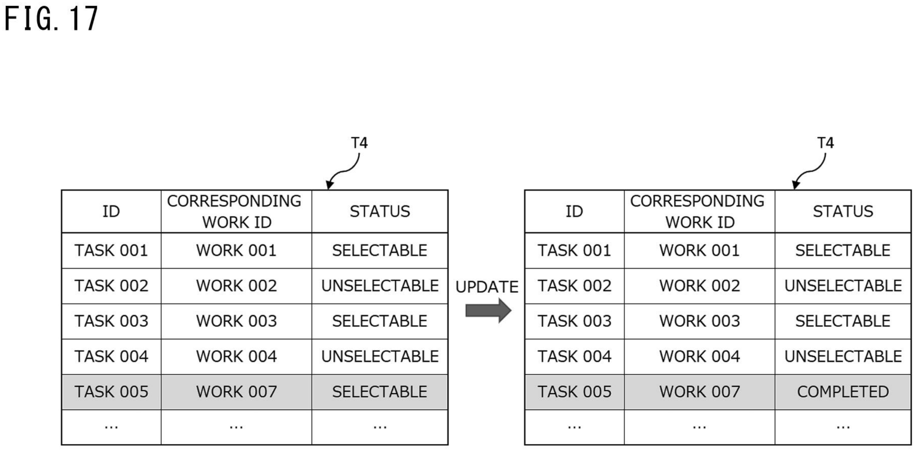

FIG. 17 is an explanatory diagram illustrating an update example of the remaining task table T4 performed due to the event E4 in FIG. 15.

Here, for example, it is assumed that the corresponding work ID of the work content in the farm field C of the event E4 specified by the processor 660 of the management apparatus 600 is "work 007".

In this case, when there is a task ID (task 005 in the example of the drawing) of which the corresponding work ID is work 007 and the status is "selectable", the processor 660 updates the status of the task ID to "completed". In addition, the status of the subsequent task ID is also updated from unselectable to selectable.

Thus, it is possible to prevent the task that has actually been completed from becoming a remaining task and being erroneously included in the task of the recalculated self-driving plan P.

In addition, the management apparatus 600 may manage a path of work travel of the farm field map Mi (see FIG. 7) corresponding to the work ID as actual performance data.

In this case, the processor 660 of the management apparatus 600 may store the path of the work travel of the agricultural machine 100 obtained during the remote driving of the event E4 as the actual performance data of the farm field map M007 of the work 007.

### [Example of Recalculation of Self-Driving Plan]

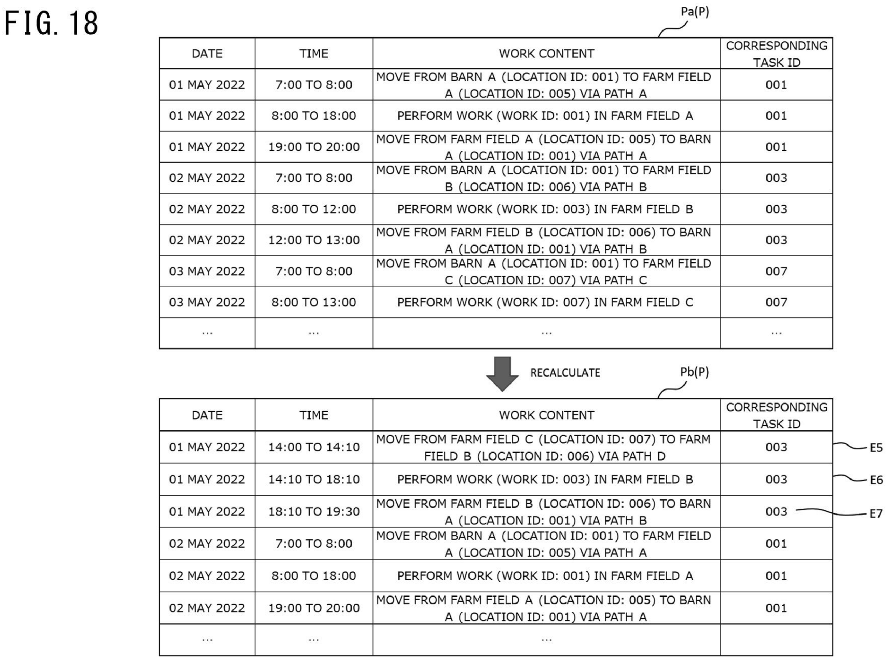

FIG. 18 is an explanatory diagram illustrating an example of the self-driving plan P created by recalculation.

In FIG. 18, "Pa" is the original plan before the event E4, and "Pb" is a plan created by recalculation after the event E4.

As described above, the facility table T1, the agricultural machine current state table T3, and the remaining task table T4 are used to calculate the plan P (fourth processing in FIG. 6). Therefore, when at least one of the agricultural machine current state table T3 and the remaining task table T4 is updated, the content of the plan P may also change.

In the example of FIG. 15, the moving distance from the farm field C to the farm field B is predominantly shorter than the moving distance from the farm field C to the farm field A. Therefore, at the time of occurrence of the event E4 (release of intervention), it is more advantageous in terms of cost such as the required time or the moving distance to the closer farm field B than to the farther farm field A according to the original plan Pa.

Therefore, as illustrated in FIG. 18, if the processor 660 performs recalculation (fourth process) at the time of occurrence of the event E4, an efficient plan Pb including the events E5, E6, and E7 can be created.

### [Example of Format of Actual Performance Data]

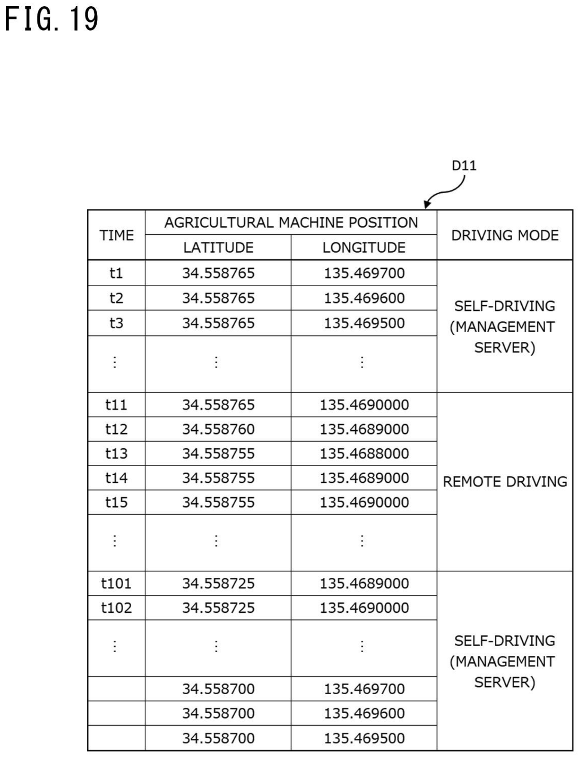

FIG. 19 is a diagram illustrating an example of the movement track data D11 accumulated in the actual performance database DB1 of the management server 600.

As illustrated in FIG. 19, the movement track data D11 is time series data of position information of the tractor 100, and includes "agricultural machine position" (latitude and longitude) and "driving mode" for each time. The agricultural machine position may be the position of the implement 300 in the case of the work vehicle 100.

In the driving mode of the movement track data D11, identification information indicating the type of the driving mode of the work vehicle 100 at each time when the work vehicle travels in a predetermined sampling cycle is written.

In the example of FIG. 19, it is meant that the driving mode started at time t1 is "self-driving (management server)", the driving mode started at time t11 is "remote driving", and the driving mode started at time t101 is "self-driving (management server)".

In the present embodiment, not only the management server 600 can provide the self-driving plan P1 to the work vehicle 100, but also the remote terminal 500 can provide the self-driving plan P2 created by itself to the work vehicle 100 and change the plan in the middle (see FIG. 12).

Therefore, the "self-driving" in the driving mode of the movement track data D11 is defined so that it can be identified which of the plan P1 and the plan P2 the self-driving is compliant with. In the example of FIG. 19, both the self-driving starting from time t1 and the self-driving starting from time t101 are the self-driving according to the plan P1 of the management server 600.

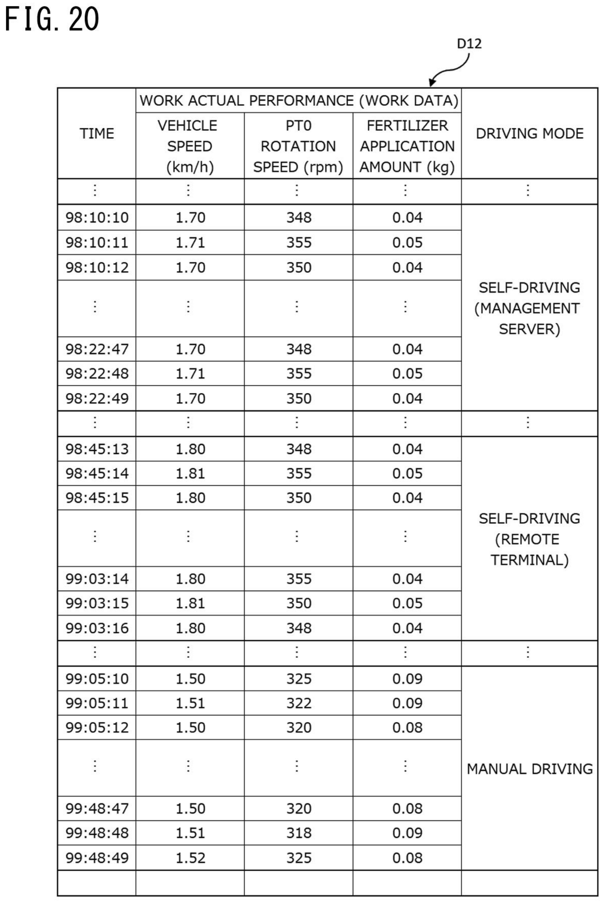

FIG. 20 is a diagram illustrating an example of the work actual performance data D12 accumulated in the actual performance database DB1 of the management apparatus 600.

As illustrated in FIG. 20, the movement track data D11 is time series data of work performance of the work vehicle 100, and includes "work performance" and "driving mode" for each time. The work performance includes, as an example, "vehicle speed", "PTO rotation speed", and "fertilizer application amount".

Also in the driving mode of the work actual performance data D12, identification information indicating the type of the driving mode of the work vehicle 100 at each time progressing in a predetermined sampling cycle is written.

The "self-driving" of the work actual performance data D12 is also defined so that it can be identified which of the plan P1 and the plan P2 the self-driving is based on. In the example of FIG. 20, the self-driving starting from the time 98:10:10 is the self-driving according to the plan P1 of the management server 600, and the self-driving starting from the time 98:40:13 is the self-driving according to the plan P2 of the remote terminal 500.

### [Other Modifications]

The embodiment disclosed herein is illustrative in all respects and is not restrictive. The scope of rights of the present invention is not limited to the above-described embodiments, and includes all modifications within the scope equivalent to the configurations described in the claims.

### REFERENCE SIGNS LIST

- 40: setting screen
- 41: date display unit
- 42: farm map
- 43: utilization Plan
- 44: agricultural machine information
- 45: register button
- 100: work vehicle (tractor)
- 101: vehicle body
- 102: prime mover (engine)
- 103: transmission device (transmission)
- 104: tire (wheel)
- 105: cabin
- 106: steering device
- 107: driver's seat
- 110: positioning device
- 111: GNSS receiver
- 112: RTK receiver
- 115: IMU
- 116: processing circuit
- 120: camera
- 130: obstacle sensor
- 140: LiDAR sensor
- 150: sensor group
- 152: steering wheel sensor
- 154: cutting angle sensor
- 156: axle sensor
- 160: control system
- 170: storage device
- 180: electronic control unit
- 181: ECU (speed control)
- 182: ECU (steering control)
- 183: ECU (implement control)
- 184: ECU (self-driving control)
- 185: ECU (path creation)
- 186: ECU (state estimation)
- 190: communication device
- 200: operation terminal
- 210: switch group
- 220: buzzer
- 230: state detection device
- 240: drive device
- 300: implement
- 340: drive device
- 380: control device
- 390: communication device
- 400: first terminal device (management terminal)
- 410: management user
- 420: input device
- 430: display device
- 450: storage device
- 460: processor
- 470: ROM
- 480: RAM
- 490: communication device
- 500: second terminal device (remote terminal)
- 510: operation user
- 520: input device
- 530: display device
- 540: operation device
- 550: storage device
- 560: processor
- 570: ROM
- 580: RAM
- 590: communication device
- 600: management apparatus
- 650: storage device
- 660: processor
- 670: ROM
- 680: RAM
- 690: communication device
- 800: network
- 900: management system
- T1: facility table (facility data)
- T2: work cost table (work cost data)
- T3: agricultural machine current state table (agricultural machine current state data)
- T4: remaining task table (remaining task data)
- P: self-driving plan
- P1: self-driving plan
- P2: self-driving plan

## Claims

1. A management apparatus for communicating with an agricultural machine to be operated in a driving mode including self-driving and non-self-driving,
the management apparatus comprising:
a processing device configured to create a self-driving plan for the agricultural machine;
a communication device configured to transmit the self-driving plan to the agricultural machine and receive actual performance data of the agricultural machine, the actual performance data being collected by the agricultural machine; and
a storage device configured to store the received actual performance data,
wherein the actual performance data includes data collected by the agricultural machine during the non-self-driving performed by an intervention occurring in the self-driving performed in accordance with the self-driving plan.

2. The management apparatus according to claim 1,
wherein the actual performance data further includes data collected by the agricultural machine during self-driving after a change made in response to a change request issued in the self-driving performed in accordance with the self-driving plan.

3. The management apparatus according to claim 1 or 2,
wherein the non-self-driving includes at least one of manual driving during which a human directly operates the agricultural machine and remote driving during which the human operates the agricultural machine with an operating terminal from a remote location.

4. The management apparatus according to claim 3,
wherein the storage device includes a database in which the actual performance data is accumulated in such a way that the actual performance data is identifiable whether the actual performance data is collected during a period of the self-driving performed in accordance with the self-driving plan, during a period of the manual driving, during a period of the remote driving, or during a period of the self-driving after the change.

5. The management apparatus according to claim 3,
wherein the intervention for the manual driving occurs on a condition involving detection of direct operation by the human.

6. The management apparatus according to claim 5,
wherein the intervention for the manual driving is released on a condition involving non-detection of the direct operation for a predetermined time, a state capable of the self-driving, and a stop of operation of the agricultural machine.

7. The management apparatus according to claim 3,
wherein an intervention for the remote driving occurs on a condition involving reception of a remote driving start request, stabilization of a communication state, and a stop of operation of the agricultural machine.

8. The management apparatus according to claim 7,
wherein the intervention for the remote driving is released on a condition involving reception of a remote driving end request, a state capable of the self-driving, and the stop of the operation of the agricultural machine.

9. The management apparatus according to claim 1 or 2,
wherein the storage device further stores data for planning required for creating the self-driving plan, and
wherein the processing device, when updating the data for planning after the intervention occurs or the change request is issued, uses the updated data for planning in creating the self-driving plan subsequently.

10. The management apparatus according to claim 9,
wherein the data for planning includes:
static data whose data content does not change even when the driving mode changes;
and
dynamic data whose data content possibly changes when the driving mode changes, and
wherein the processing device designates the dynamic data as a target of update when the intervention occurs or when the change request is issued.

11. The management apparatus according to claim 10,
wherein the static data includes at least one of facility data of a farm, a utilization plan of the farm, and agricultural machine information of the farm.

12. The management apparatus according to claim 10,
wherein the dynamic data includes at least one of data indicating a current status of the agricultural machine and data indicating a progress status of a task constituting the self-driving plan.

13. A management method for managing an agricultural machine to be operated in a driving mode including self-driving and non-self-driving, by a management apparatus for communicating with the agricultural machine,
the management method comprising:
a step of creating a self-driving plan for the agricultural machine;
a step of transmitting the self-driving plan to the agricultural machine;
a step of receiving actual performance data of the agricultural machine, the actual performance data being collected by the agricultural machine; and
a step of storing the received actual performance data,
wherein the actual performance data includes data collected by the agricultural machine during the non-self-driving performed by an intervention occurring in the self-driving performed in accordance with the self-driving plan.

14. A computer program for causing a computer to operate as a management apparatus for communicating with an agricultural machine to be operated in a driving mode including self-driving and non-self-driving,
the computer program comprising:
a step of creating a self-driving plan for the agricultural machine;
a step of transmitting the self-driving plan to the agricultural machine;
a step of receiving actual performance data of the agricultural machine, the actual performance data being collected by the agricultural machine; and
a step of storing the received actual performance data,
wherein the actual performance data includes data collected by the agricultural machine during the non-self-driving performed by an intervention occurring in the self-driving performed in accordance with the self-driving plan.

15. A management system for managing an agricultural machine,
the management system comprising:
the agricultural machine configured to be operated in a driving mode including self-driving and manual driving; and
a management apparatus configured to communicate with the agricultural machine,
wherein the management apparatus transmits a self-driving plan for the agricultural machine to the agricultural machine,
wherein the agricultural machine transmits, when an intervention for the manual driving occurs in the self-driving performed in accordance with the self-driving plan, actual performance data of the agricultural machine collected during the manual driving, to the management apparatus, and
wherein the management apparatus causes a storage device of the management apparatus to store the received actual performance data during the manual driving.

16. The management system according to claim 15,
wherein the driving mode further includes remote driving,
the management system further comprising
a remote terminal configured to communicate with the agricultural machine and cause the agricultural machine to perform the remote driving,
wherein the agricultural machine transmits, when an intervention for the remote driving occurs in the self-driving performed in accordance with the self-driving plan, actual performance data of the agricultural machine collected during the remote driving, to the management apparatus, and
wherein the management apparatus causes the storage device of the management apparatus to store the received actual performance data during the remote driving.

17. The management system according to claim 15 or 16,
wherein the remote terminal is capable of transmitting, to the agricultural machine, a change request for changing the self-driving,
wherein the agricultural machine transmits, to the management apparatus, actual performance data of the agricultural machine collected during self-driving after a change made in response to the change request received in the self-driving performed in accordance with the self-driving plan, and
wherein the management apparatus causes the storage device of the management apparatus to store the received actual performance data during the self-driving after the change.
